# EUROPÄISCHE PATENTANMELDUNG

(11) **EP 4 431 785 A1**
(43) Veröffentlichungstag der Anmeldung: **18.09.2024**
(21) Anmeldenummer: 23220769.6
(22) Anmeldetag: 29.12.2023
(51) Int. Cl.: F16M 11/04, F16B 7/00, F16M 11/06, F16M 13/00, B60R 11/02, G03B 17/56, H04M 1/02, H04N 5/64

(54) **HALTESYSTEM UND VERFAHREN ZUR LÖSBAREN BEFESTIGUNG EINES FLACHEN GEGENSTANDS AN EINEM OBJEKT UND HALTEVORRICHTUNG ZUR VERWENDUNG IN EINEM SOLCHEN HALTESYSTEM**

(30) Priorität: 13.03.2023 DE 102023106225
(71) Anmelder: Keller, Garrit, 13053 Berlin (DE)
(72) Erfinder: Keller, Garrit, 13053 Berlin (DE)
(74) Vertreter: Wörz, Volker Alfred

(57) **Zusammenfassung**

Die Erfindung betrifft ein Haltesystem (10) zur lösbaren Befestigung eines flachen Gegenstands (12) an einem Objekt (14). Einem der beiden ist eine Aufnahmestruktur (16) und dem anderen eine Haltestruktur (18) zugeordnet. Die Strukturen (16, 18) können miteinander in Eingriff treten. Die Haltestruktur (18) umfasst zwei entgegengesetzt zueinander angeordnete und relativ zueinander bewegliche Rastelemente (20, 22) mit Rastabschnitten (24), die in entsprechende Aufnahmeabschnitte (26; 26') der Aufnahmestruktur (16) eingreifen können. Die Rastelemente (20, 22) sind relativ zueinander beweglich, sodass ein Abstand (a1) zwischen den Rastabschnitten (24) veränderbar ist, um die Haltestruktur (18) zwischen einer Freigabestellung und einer Raststellung umzuschalten. Es wird vorgeschlagen, dass die Haltestruktur (18) einen Grundkörper (30) aufweist und lediglich ein Rastelement (20) an dem Grundkörper (30) beweglich geführt ist, wohingegen ein anderes entgegengesetzt zu dem beweglichen Rastelement (20) angeordnetes Rastelement (22) unbeweglich an dem Grundkörper (30) befestigt ist oder einen integralen Bestandteil des Grundkörpers (30) bildet.

## Beschreibung

Die vorliegende Erfindung betrifft ein Haltesystem zur lösbaren Befestigung eines flachen Gegenstands an einem Objekt, wobei einem der beiden, Gegenstand oder Objekt, eine Aufnahmestruktur und dem anderen der beiden eine Haltestruktur zugeordnet ist und die beiden Strukturen zur lösbaren Befestigung des flachen Gegenstands an dem Objekt miteinander in Eingriff treten können. Die Haltestruktur weist mindestens zwei entgegengesetzt zueinander angeordnete und relativ zueinander bewegliche Rastelemente auf, die Rastabschnitte haben, die ausgebildet sind, mit entsprechenden Aufnahmeabschnitten der Aufnahmestruktur in Eingriff zu treten. Die entgegengesetzt zueinander angeordneten Rastelemente sind derart relativ zueinander beweglich, dass ein Abstand zwischen den Rastabschnitten veränderbar ist, um die Haltestruktur zwischen einer Freigabestellung, in der die Haltestruktur in die Aufnahmestruktur eingesetzt oder aus dieser entnommen werden kann, und einer Raststellung, in der die Haltestruktur mit der Aufnahmestruktur verrastet ist, umzuschalten.

Außerdem betrifft die Erfindung eine Haltevorrichtung zur Verwendung in einem solchen Haltesystem. Die Haltevorrichtung stellt ein Objekt dar, an dem ein flacher Gegenstand lösbar befestigbar ist. Die Haltevorrichtung umfasst eine Haltestruktur, die zur lösbaren Befestigung an einer dem flachen Gegenstand zugeordneten Aufnahmestruktur mit dieser in Eingriff treten kann. Die Haltestruktur weist mindestens zwei entgegengesetzt zueinander angeordnete und relativ zueinander bewegliche Rastelemente auf, die Rastabschnitte haben, die ausgebildet sind, mit entsprechenden Aufnahmeabschnitten der Aufnahmestruktur in Eingriff zu treten. Die entgegengesetzt zueinander angeordneten Rastelemente sind derart relativ zueinander beweglich, dass sie in einer Raststellung der Haltestruktur einen größeren Abstand zueinander aufweisen als in einer Freigabestellung der Haltestruktur. Die Haltestruktur kann in der Freigabestellung in die Aufnahmestruktur eingesetzt oder aus dieser entnommen und in der Raststellung mit der Aufnahmestruktur verrastet werden.

Schließlich betrifft die vorliegende Erfindung auch ein Verfahren zur lösbaren Befestigung eines flachen Gegenstands an einem Objekt, wobei einem der beiden, Gegenstand oder Objekt, eine Aufnahmestruktur und dem anderen der beiden eine Haltestruktur zugeordnet ist, die zur lösbaren Befestigung des flachen Gegenstands an dem Objekt miteinander in Eingriff treten können. Die Haltestruktur weist mindestens zwei entgegengesetzt zueinander angeordnete und relativ zueinander bewegliche Rastelemente auf, die Rastabschnitte haben, die ausgebildet sind, mit entsprechenden Aufnahmeabschnitten der Aufnahmestruktur in Eingriff zu treten. Die entgegengesetzt zueinander angeordneten Rastelemente sind derart relativ zueinander beweglich, dass sie in einer Raststellung der Haltestruktur einen größeren Abstand zueinander aufweisen als in einer Freigabestellung der Haltestruktur. Die Haltestruktur kann in der Freigabestellung in die Aufnahmestruktur eingesetzt oder aus dieser entnommen und in der Raststellung mit der Aufnahmestruktur verrastet werden.

Haltesysteme der eingangs genannten Art sind in unterschiedlichen Ausführungsformen aus dem Stand der Technik bekannt. Die unterschiedlichen Systeme unterscheiden sich im Wesentlichen dadurch, ob die beweglichen Rastelemente zwischen der Freigabestellung der Haltestruktur und der Raststellung der Haltestruktur rotatorisch oder linear bewegt werden. Systeme bei denen die Rastelemente eine rotatorische Bewegung ausführen, sind bspw. die Systeme von QuadLock (z.B. US 8,830,663 B2 und US 9,243,739 B2) und SP Connect (z.B. EP 3 391 631 A1). Auch die EP 4 101 701 A1 beschreibt ein solches rotatorisches System. Problematisch bei den rotatorischen Systemen ist der Platzbedarf, der erforderlich ist, um ein in der Freigabestellung auf die Haltevorrichtung aufgesetztes elektrisches Endgerät um 45° oder 90° zu rotieren, um die Haltestruktur aus der Freigabestellung in die Raststellung zu bringen und das Endgerät an der Haltevorrichtung zu sichern.

Systeme mit linear beweglichen Rastelementen sind bspw. von Mous ("Intralock", z.B. WO 2021/ 044 149 A1) und von PeakDesign ("SlimLink", z.B. US 2023/ 054 404 A1) bekannt. Bei dem Haltesystem von PeakDesign umfasst die Haltevorrichtung eine rechteckige ebene Auflagefläche zur Aufnahme einer Rückseite eines mobilen Endgeräts, auf der in etwa mittig eine erhabene Haltestruktur ausgebildet ist. Die Haltestruktur weist mindestens zwei entgegengesetzt zueinander angeordnete jeweils bewegliche Rastelemente auf, die Rastabschnitte haben, die mit entsprechenden Aufnahmeabschnitten einer Aufnahmestruktur an der Rückseite des mobilen Endgeräts in Eingriff treten können. Die in entgegengesetzte Richtungen relativ zueinander beweglichen Rastelemente weisen in einer Raststellung der Haltestruktur einen größeren Abstand zueinander auf als in einer Freigabestellung der Haltestruktur. Die Haltestruktur kann in der Freigabestellung in die Aufnahmestruktur eingesetzt oder aus dieser entnommen und in der Raststellung mit der Aufnahmestruktur verrastet werden.

Zur Betätigung der Rastelemente sind an gegenüberliegenden Seiten eines Grundkörpers der Haltestruktur Betätigungstasten angeordnet. Der Nutzer muss mit Daumen und/oder Zeigefinger einer Hand mindestens eine der Tasten gedrückt halten, um die Haltestruktur in die Freigabestellung zu bringen, während er mit der anderen Hand das mobile Endgerät umgreifen muss. Damit gestaltet sich die Bedienung des bekannten Haltesystems, insbesondere das Entfernen des mobilen Endgeräts von der Haltevorrichtung, als sehr umständlich und aufwendig.

Darüber hinaus tritt bei dem bekannten Haltesystem in der Freigabestellung der Haltestruktur die gesamte erhabene Haltestruktur in eine entsprechende Vertiefung der Aufnahmestruktur ein. Dies kann bei Verschmutzung der Haltestruktur oder der Vertiefung der Aufnahmestruktur zu einer erheblich erschwerten Bedienung bis hin zu einer Beschädigung des Haltesystems führen.

Schließlich weist die Haltestruktur des bekannten Haltesystems relativ viele Teile auf, ist aufwendig in Aufbau und Konstruktion und recht filigran. Um die erforderliche Robustheit zu erreichen, müssen sehr viele Teile der Haltestruktur aus Metall gefertigt sein. Bei dem bekannten Haltesystem bewegen sich die Rastelemente während ihrer linearen Bewegung nicht nur (parallel zur Flächenerstreckung der ebenen Auflagefläche der Haltevorrichtung) aufeinander zu bzw. voneinander weg, sondern sie tauchen bei einer Bewegung aufeinander zu zusätzlich auch noch quer bzw. schräg zu der Flächenerstreckung der ebenen Auflagefläche in die Haltevorrichtung hinein, sodass sie unterhalb der Auflagefläche angeordnet sind. Dies wird dadurch erreicht, dass die Rastelemente auf einer Achse gelagert sind und sich über diese radial nach innen sowie in das Gehäuse drehen, um die Haltestruktur in die Freigabestellung zu bewegen.

Ausgehend von dem beschriebenen Stand der Technik liegt der vorliegenden Erfindung die Aufgabe zugrunde, ein lineares Haltesystem zu schaffen, das besonders einfach und schnell zu bedienen und besonders robust ausgestaltet ist.

Zur Lösung dieser Aufgabe wird ein Haltesystem mit den Merkmalen des Anspruchs 1 vorgeschlagen. Insbesondere wird ausgehend von dem Haltesystem der eingangs genannten Art vorgeschlagen, dass
die Haltestruktur einen Grundkörper aufweist und
lediglich mindestens ein erstes Rastelement der Rastelemente an dem Grundkörper beweglich geführt ist, wohingegen mindestens ein anderes entgegengesetzt zu dem mindesten einen ersten beweglichen Rastelement angeordnetes Rastelement der Rastelemente unbeweglich an dem Grundkörper befestigt ist oder einen integralen Bestandteil des Grundkörpers bildet, d.h. einstückig mit diesem ausgebildet ist.

Nachfolgend wird zum besseren Verständnis nur noch von einem beweglichen ersten Rastelement und einem feststehenden, unbeweglichen anderen oder zweiten Rastelement gesprochen. Es versteht sich aber, dass damit immer mindestens ein bewegliches erstes Rastelement bzw. mindestens ein feststehendes, unbewegliches anderes oder zweites Rastelement gemeint ist.

Gemäß einer vorteilhaften Weiterbildung der Erfindung wird vorgeschlagen, dass das erste bewegliche Rastelement zwischen einer ausgefahrenen Stellung, in der sich die Haltestruktur in der Raststellung befindet, und einer eingefahrenen Stellung, in der sich die Haltestruktur in der Freigabestellung befindet, linear beweglich an dem Grundkörper geführt ist. In einer ersten bevorzugten Ausführungsform wird vorgeschlagen, dass die Rastabschnitte einander abgewandt an den Rastelementen ausgebildet sind. Dementsprechend sind die Aufnahmeabschnitte der Aufnahmestruktur einander zugewandt ausgebildet oder angeordnet. In der Raststellung der Haltestruktur ist das bewegliche erste Rastelement radial nach außen weg von dem feststehenden anderen Rastelement bewegt. Dementsprechend ist das erste Rastelement in der Freigabestellung der Haltestruktur radial nach innen auf das andere Rastelement zu bewegt. Die Rastabschnitte können in der Freigabestellung in die Aufnahmestruktur eingeführt und radial innerhalb der bzw. vor den entsprechenden Aufnahmeabschnitten positioniert werden. Beim Überführen der Haltestruktur in die Raststellung wird das erste Rastelement radial nach außen bewegt, sodass dessen Rastabschnitt von innen in den entsprechenden Aufnahmeabschnitt eintaucht. Eine weitere Bewegung des beweglichen ersten Rastelements bewirkt dann eine Relativbewegung zwischen der Aufnahmestruktur und der Haltestruktur, sodass auch das feststehende andere Rastelement von innen in einen entsprechenden Aufnahmeabschnitt eintaucht. Nun sind die Haltestruktur und die Aufnahmestruktur miteinander verrastet.

Gemäß einer alternativen Ausführungsform wäre es jedoch auch möglich, dass die Rastabschnitte einander zugewandt an den Rastelementen ausgebildet sind. Dementsprechend wären die Aufnahmeabschnitte der Aufnahmestruktur einander abgewandt ausgebildet oder angeordnet. In der Raststellung der Haltestruktur wäre das bewegliche erste Rastelement radial nach innen auf das feststehende andere Rastelement zu bewegt. Dementsprechend wäre das erste Rastelement in der Freigabestellung der Haltestruktur radial nach außen weg von dem anderen Rastelement bewegt. Die Rastabschnitte könnten in der Freigabestellung in die Aufnahmestruktur eingeführt und radial außerhalb bzw. vor den entsprechenden Aufnahmeabschnitten positioniert werden. Beim Überführen der Haltestruktur in die Raststellung würde das erste Rastelement radial nach innen bewegt, sodass dessen Rastabschnitt von außen in den entsprechenden Aufnahmeabschnitt eintauchen würde.

Eine weitere Bewegung des beweglichen ersten Rastelements würde dann eine Relativbewegung zwischen der Aufnahmestruktur und der Haltestruktur bewirken, sodass auch das feststehende andere Rastelement von außen in einen entsprechenden Aufnahmeabschnitt eintauchen würde. Nun wären die Haltestruktur und die Aufnahmestruktur miteinander verrastet.

Der durch Bewegung des beweglichen ersten Rastelements von einer ausgefahrenen in eine eingefahrene Stellung zurückgelegte Bewegungsweg ist so groß, dass die Haltestruktur von der Raststellung in die Freigabestellung gelangt, so dass die Haltestruktur in die Aufnahmestruktur eingesetzt werden kann.

Bei der Erfindung wird die Bewegung des beweglichen ersten Rastelements von der ausgefahrenen in die eingefahrene Stellung in besonders vorteilhafter Weise durch die nur auf das bewegliche erste Rastelement aufgesetzte Aufnahmestruktur, insbesondere zusammen mit dem daran befestigten flachen Gegenstand, bewirkt. Nach dem Aufsetzen oder Einsetzen der Aufnahmestruktur nur auf bzw. in das erste Rastelement kann das erste Rastelement durch Krafteinwirkung auf den flachen Gegenstand, an dem die Aufnahmestruktur ausgebildet oder angeordnet ist, bewegt werden. Insbesondere kann das erste Rastelement von einer ausgefahrenen Stellung in eine eingefahrene Stellung bewegt werden, um die Haltestruktur von der Raststellung in die Freigabestellung zu überführen. In der eingefahrenen Stellung des ersten beweglichen Rastelements kann die Aufnahmestruktur (beim Befestigen des flachen Gegenstands an dem Objekt) auf die Haltestruktur aufgesetzt oder (beim Lösen des flachen Gegenstands von dem Objekt) von der Haltestruktur abgehoben werden. Es sind keine mechanischen Betätigungstasten erforderlich, um die Haltestruktur zwischen ihrer Raststellung und ihrer Freigabestellung umzuschalten.

Beim Befestigen des flachen Gegenstands hintergreift beim Aufsetzen der Aufnahmestruktur auf das erste bewegliche Rastelement ein erster Rastabschnitt des ersten beweglichen Rastelements einen entsprechenden ersten Aufnahmeabschnitt der Aufnahmestruktur. Ein zweiter Rastabschnitt eines entgegengesetzt zu dem ersten beweglichen Rastelement angeordneten zweiten feststehenden Rastelements hintergreift dagegen einen entsprechenden dem ersten Aufnahmeabschnitt gegenüberliegend angeordneten zweiten Aufnahmeabschnitt der Aufnahmestruktur nicht. Stattdessen ist das zweite feststehende Rastelement bzw. dessen zweiter Rastabschnitt außerhalb des zweiten Aufnahmeabschnitts angeordnet. Die Aufsetzrichtung der Aufnahmestruktur auf die Haltestruktur verläuft dabei im Wesentlichen quer zu der Bewegungsrichtung des beweglichen ersten Rastelements. Beim Aufsetzen der Aufnahmestruktur auf das erste bewegliche Rastelement kann das zweite feststehende Rastelement nicht in den Aufnahmeabschnitt eintreten, da sich die Haltestruktur in ihrer Rastposition befindet, in der die Rastelemente in entgegengesetzten Richtungen voneinander weg auseinander bewegt sind. Dabei ist ein Abstand zwischen den ersten und zweiten Rastabschnitten vorzugsweise größer als eine lichte Weite zwischen den ersten und zweiten Aufnahmeabschnitten. Aus den genannten Gründen wird die Aufnahmestruktur (zusammen mit dem flachen Gegenstand) schräg auf die Haltestruktur aufgesetzt.

In diesem Sinne wird vorgeschlagen, dass die Aufnahmestruktur derart ausgebildet ist, dass sie schräg auf das mindestens eine erste bewegliche Rastelement aufsetzbar ist, sodass ein erster Aufnahmeabschnitt der Aufnahmestruktur hinter den Rastabschnitt des mindestens einen ersten beweglichen Rastelements greift, wohingegen ein zweiter Aufnahmeabschnitt der Aufnahmestruktur vor dem Rastabschnitt des mindestens einen anderen fest angeordneten Rastelements angeordnet ist.

Nach dem Aufsetzen des flachen Gegenstands auf das erste bewegliche Rastelement bewegt der Nutzer den flachen Gegenstand zusammen mit der Aufnahmestruktur und dem beweglichen ersten Rastelement in die Bewegungsrichtung des beweglichen ersten Rastelements, sodass dieses aus der ausgefahrenen Stellung in die eingefahrene Stellung linear bewegt wird.

In diesem Sinne wird vorgeschlagen, dass die Haltestruktur derart ausgebildet ist, dass bei schräg auf die Haltestruktur aufgesetzter Aufnahmestruktur, eine Kraftbeaufschlagung der Aufnahmestruktur in eine Richtung, die im Wesentlichen parallel zu einer Bewegungsrichtung des mindestens einen ersten beweglichen Rastelements verläuft, das mindestens eine erste bewegliche Rastelement in eine eingefahrene Stellung bewegt.

Die Bewegung des flachen Gegenstands zusammen mit der Aufnahmestruktur aus der ausgefahrenen Stellung in die eingefahrene Stellung des beweglichen ersten Rastelements kann entgegen der Kraft eines Federelements erfolgen. Das Federelement kann dazu ausgebildet sein, das erste Rastelement in seine ausgefahrene Stellung zu bewegen und dort zu halten.

In der eingefahrenen Stellung des ersten beweglichen Rastelements befindet sich die Haltestruktur in ihrer Freigabestellung und kann von der Aufnahmestruktur aufgenommen werden. Der Nutzer kann nun den flachen Gegenstand zusammen mit der daran befestigten oder ausgebildeten Aufnahmestruktur aus der schrägen Stellung in Richtung der Haltestruktur verschwenken, so dass das feststehende zweite Rastelement in die Aufnahmestruktur eintritt. Eine Schwenkachse der Verschwenkbewegung verläuft dabei im Bereich des beweglichen ersten Rastelements, insbesondere im Bereich des ersten Rastabschnitts, quer zu der Bewegungsrichtung des beweglichen ersten Rastelements.

In diesem Sinne wird vorgeschlagen, dass die Aufnahmestruktur derart ausgebildet ist, dass sie bei in der eingefahrenen Stellung befindlichem mindestens einem ersten beweglichen Rastelement aus der schräg aufgesetzten Stellung in Richtung der Haltestruktur verschwenkbar ist.

Dann kann der Nutzer, der den flachen Gegenstand immer noch umgreift, diesen zusammen mit der Aufnahmestruktur und dem beweglichen ersten Rastelement in die entgegengesetzte Bewegungsrichtung des beweglichen ersten Rastelements bewegen, sodass dieses aus der eingefahrenen Stellung in die ausgefahrene Stellung linear bewegt wird. Dabei tritt der zweite Rastabschnitt des feststehenden zweiten Rastelements mit dem entsprechenden zweiten Aufnahmeabschnitt der Aufnahmestruktur in Eingriff. Insbesondere hintergreift dann der zweite Rastabschnitt den zweiten Aufnahmeabschnitt. Die Haltestruktur befindet sich nun wieder in ihrer Raststellung. Der flache Gegenstand ist über die Aufnahmestruktur sicher und zuverlässig an der Haltestruktur des Objekts gehalten.

In diesem Sinne wird vorgeschlagen, dass die Haltestruktur derart ausgebildet ist, dass sich bei in Richtung der Haltestruktur verschwenkter Aufnahmestruktur das mindestens eine erste bewegliche Rastelement zusammen mit der Aufnahmestruktur in die ausgefahrene Stellung bewegt, wobei ein zweiter Aufnahmeabschnitt der Aufnahmestruktur, der dem ersten Aufnahmeabschnitt gegenüberliegend angeordnet ist, hinter den Rastabschnitt des mindestens einen anderen fest angeordneten Rastelements greift.

Die Bewegung des flachen Gegenstands zusammen mit der Aufnahmestruktur aus der eingefahrenen Stellung in die ausgefahrene Stellung des beweglichen ersten Rastelements kann mittels eines Federelements unterstützt, unter Umständen - bei ausreichend kräftig ausgebildetem Federelement - sogar selbsttätig alleine durch die Kraft des Federelements ohne Zutun des Nutzers ausgeführt werden.

Das Lösen des flachen Gegenstands bzw. dessen Aufnahmestruktur von dem Objekt bzw. dessen Haltestruktur erfolgt in umgekehrter Reihenfolge. Der Nutzer ergreift den flachen Gegenstand, drückt ihn zusammen mit dem beweglichen ersten Rastelement in die eingefahrene Stellung (lineare Bewegung in eine erste Richtung), verschwenkt den flachen Gegenstand zusammen mit der Aufnahmestruktur um die Schwenkachse weg von der Haltevorrichtung (Verschwenkbewegung um die Schwenkachse) und bewegt den flachen Gegenstand dann zusammen mit dem ersten Rastelement in die ausgefahrene Stellung (lineare Bewegung in eine zweite Richtung, die der ersten Richtung entgegengesetzt ist), in der der flache Gegenstand bzw. dessen Aufnahmestruktur von dem Objekt bzw. dessen Haltestruktur gelöst und entfernt werden kann.

Die obige Beschreibung geht davon aus, dass dem flachen Gegenstand die Aufnahmestruktur und dem Objekt die Haltestruktur zugeordnet ist. Selbstverständlich wäre es auch denkbar, dass in einfacher kinematischer Umkehr dem flachen Gegenstand die Haltestruktur und dem Objekt die Aufnahmestruktur zugeordnet ist.

Durch das lediglich eine bewegliche Rastelement können die Anzahl der beweglichen Teile des Haltesystems deutlich reduziert werden. Dies erlaubt einen einfacheren, kostengünstigeren und robusteren Aufbau des Haltesystems. Zudem ist die Bedienung - wie oben beschrieben - besonders einfach und nutzerfreundlich. Insbesondere ist die Bedienung mit einer Hand möglich.

Gemäß einer bevorzugten Ausführungsform der Erfindung wird vorgeschlagen, dass das mindestens eine erste bewegliche Rastelement mittels eines Federelements beaufschlagt und in einer ausgefahrenen Stellung gehalten ist, sodass sich die Haltestruktur in der Raststellung befindet. Das Federelement umfasst mindestens eine, bevorzugt zwei Druckfedern, die sich einerseits an dem Grundkörper und andererseits an dem beweglichen ersten Rastelement abstützen. Bevorzugt sind die Feder(n) des Federelements als Schraubenfedern ausgebildet. Denkbar wäre bspw. auch eine Ausgestaltung als Bügelfeder.

Das Federelement sollte einerseits so stark ausgebildet sein, dass es das bewegliche erste Rastelement, je nach Ausgestaltung des Haltesystems auch mit der Aufnahmestruktur und dem daran befestigten oder ausgebildeten flachen Gegenstand, in der ausgefahrenen Stellung bzw. die Haltestruktur in der Raststellung halten kann. Zusätzlich können Magnete vorgesehen sein, die zwischen der Aufnahmestruktur und der Haltestruktur wirken und eine zusätzliche magnetische Haltekraft aufbringen, um das bewegliche erste Rastelement, je nach Ausgestaltung des Haltesystems auch mit der Aufnahmestruktur und dem daran befestigten oder ausgebildeten flachen Gegenstand, in der ausgefahrenen Stellung bzw. die Haltestruktur in der Raststellung zusätzlich zu sichern. Zusätzliche Haltekräfte zum Sichern der Haltestruktur in der Raststellung können auch auf andere Weise als magnetisch aufgebracht werden.

Dementsprechend wird vorgeschlagen, dass das mindestens eine erste bewegliche Rastelement manuell entgegen der Kraft eines Federelements beaufschlagbar ist, um das mindestens eine erste Rastelement in eine eingefahrene Stellung zu bewegen, sodass sich die Haltestruktur in der Freigabestellung befindet. Um das bewegliche erste Rastelement in die eingefahrene Stellung bzw. die Haltestruktur in die Freigabestellung zu bewegen, muss also die Federkraft des Federelements und - sofern vorhanden - zusätzliche Haltekräfte, bspw. eine magnetische Haltekraft, überwunden werden.

Vorzugsweise ist der flache Gegenstand ein mobiles elektronisches Endgerät, insbesondere ein Mobiltelefon, ein Smartphone, ein Tablet-PC, ein mobiles Navigationsgerät, ein Fotoapparat oder ein Bildschirmgerät.

Bevorzugt ist die Aufnahmestruktur dem flachen Gegenstand zugeordnet, vorzugsweise ist sie integraler Bestandteil des flachen Gegenstands oder Bestandteil einer Hülle für den flachen Gegenstand, die an dem flachen Gegenstand lösbar befestigbar ist. Insbesondere ist daran gedacht, dass die Aufnahmestruktur auf einer nach außen von dem mobilen elektronischen Endgerät weg gerichteten Rückseite einer Hülle für das mobile elektronische Endgerät angeordnet ist. Dabei ist es denkbar, dass die Aufnahmestruktur separat von der Hülle ausgebildet und bspw. mittels einer Klebeschicht an der Rückseite der Hülle befestigt ist. Auch eine Befestigung durch Klemmen, Schrumpfen, Schweißen, Löten oder auf andere Weise an der Hülle wäre denkbar. Die Aufnahmestruktur kann auch direkt an dem flachen Gegenstand befestigt werden, wiederum auf eine der genannten Arten.

Wenn die Aufnahmestruktur integraler Bestandteil des flachen Gegenstands ist, kann sie bspw. in das Gehäuse eines mobilen elektronischen Endgeräts eingearbeitet sein. Bevorzugt ist die Aufnahmestruktur ein integraler Bestandteil der Hülle für das mobile elektronische Endgerät. Die vorliegende Erfindung betrifft somit auch Schutzhüllen für mobile elektronische Endgeräte, auf deren äußerer Rückseite die Aufnahmestruktur des erfindungsgemäßen Haltesystems ausgebildet oder angeordnet ist. Über die Aufnahmestruktur kann die Schutzhülle lösbar mit einer Haltestruktur des Haltesystems in Eingriff treten, um das in der Hülle aufgenommen mobile Endgerät lösbar an der Haltestruktur zu befestigen.

Vorzugsweise ist das Objekt eine Haltevorrichtung, die zur vorzugsweise lösbaren Befestigung an einem Bauteil eines Fahrzeugs, insbesondere an einem Fahrzeuglenker oder einem Kraftfahrzeugarmaturenbrett, oder zur vorzugsweise lösbaren Befestigung an einem Einrichtungsgegenstand oder zum selbstständigen Stehen auf einer ebenen Fläche ausgebildet ist, oder das Objekt ist ein persönliches Utensil eines Nutzers, insbesondere eine Geldbörse, eine Handtasche, ein Taschenkalender, ein Zeichenbrett oder ein Notizblock. Eine Haltevorrichtung zum selbstständigen Stehen kann bspw. als ein Stativ oder sog. Tripod ausgebildet sein. Der Einrichtungsgegenstand kann bspw. ein Regal, eine Stehlampe, ein Tischfuß, eine Schranktür oder ähnliches sein. Die Ausgestaltung des Objekts als ein persönliches Utensil des Nutzers hat den Vorteil, dass bspw. ein mobiles elektronisches Endgerät und eine Geldbörse oder eine Handtasche zu einer leichter handhabbaren lösbaren Einheit zusammengefügt werden können.

Die Haltevorrichtung weist bevorzugt eine Befestigungsvorrichtung zur vorzugsweise lösbaren Befestigung der Haltevorrichtung an einem Bauteil eines Fahrzeugs, insbesondere an einem Fahrzeuglenker, einer Fahrzeugkarosserie oder an einem Kraftfahrzeugarmaturenbrett, insbesondere an Lamellen eines Heizungs- oder Kühlluftauslasses in dem Armaturenbrett, oder zur vorzugsweise lösbaren Befestigung der Haltevorrichtung an einem Einrichtungsgegenstand auf.

Es wird vorgeschlagen, dass die Haltestruktur dem Objekt zugeordnet ist, vorzugsweise integraler Bestandteil des Objekts oder Bestandteil einer Hülle für das Objekt ist, die an dem Objekt lösbar befestigbar ist. So wäre es bspw. denkbar, dass eine Geldbörse oder eine Handtasche an einer ihrer Außenseiten eine Haltestruktur des erfindungsgemäßen Haltesystems aufweist, über die die Geldbörse oder die Handtasche lösbar an einer Aufnahmestruktur eines flachen Gegenstands befestigt werden kann.

Ein erfindungsgemäßes Verfahren zur lösbaren Befestigung eines flachen Gegenstands an einem Objekt mithilfe des erfindungsgemäßen Haltesystems umfasst die nachfolgenden Verfahrensschritte:
Aufsetzen der Aufnahmestruktur schräg auf mindestens ein erstes bewegliches Rastelement, sodass ein erster Aufnahmeabschnitt der Aufnahmestruktur hinter einen Rastabschnitt von mindestens einem ersten beweglichen Rastelement greift, wohingegen ein zweiter Aufnahmeabschnitt der Aufnahmestruktur vor dem Rastabschnitt von mindestens einem anderen fest angeordneten Rastelement angeordnet ist, das entgegengesetzt zu dem mindestens einen ersten beweglichen Rastelement angeordnet ist,
bei auf das mindestens eine erste bewegliche Rastelement aufgesetzter Aufnahmestruktur, Beaufschlagen der schräg aufgesetzten Aufnahmestruktur mit einer Kraft in eine Richtung, die im Wesentlichen parallel zu einer Bewegungsrichtung des mindestens einen ersten beweglichen Rastelements verläuft, sodass das mindestens eine erste bewegliche Rastelement von der Aufnahmestruktur in eine eingefahrene Stellung bewegt wird, in der sich die Haltestruktur in einer Freigabestellung befindet,
bei in der eingefahrenen Stellung befindlichem mindestens einem ersten beweglichen Rastelement, Verschwenken der Aufnahmestruktur aus der schräg aufgesetzten Stellung in Richtung der Haltestruktur, und
bei in Richtung der Haltestruktur verschwenkter Aufnahmestruktur, Bewegen des mindestens einen ersten beweglichen Rastelements zusammen mit der Aufnahmestruktur in eine ausgefahrene Stellung, in der sich die Haltestruktur in einer Raststellung befindet, wobei ein zweiter Aufnahmeabschnitt der Aufnahmestruktur, der dem ersten Aufnahmeabschnitt gegenüberliegend angeordnet ist, hinter den Rastabschnitt des mindestens einen anderen fest angeordneten Rastelements greift.

Weitere Merkmale und Vorteile der vorliegenden Erfindung werden nachfolgend unter Bezugnahme auf die Figuren näher erläutert. Es wird betont, dass einzelnen in den Figuren gezeigte Merkmale auch für sich alleine erfindungswesentlich sein können, selbst wenn dies in den Figuren nicht gezeigt und in der Beschreibung nicht ausdrücklich erwähnt ist. Ferner können die einzelnen in den Figuren gezeigten Merkmale in einer beliebigen Weise miteinander kombiniert werden, selbst wenn diese Kombination in den Figuren nicht gezeigt und in der Beschreibung nicht ausdrücklich erwähnt ist. Es zeigen:
- Figur 1: ein erfindungsgemäßes Haltesystem gemäß einer ersten bevorzugten Ausführungsform in einer perspektivischen Ansicht mit an einem Fahrzeuglenker befestigter Haltevorrichtung und einer an einer Haltestruktur befestigten Aufnahmestruktur;
- Figur 2: das Haltesystem aus Fig. 1 ohne an der Haltestruktur befestigter Aufnahmestruktur;
- Figur 3: das Haltesystem aus Fig. 2 in einer Explosionsdarstellung;
- Figur 4: eine Aufnahmestruktur eines erfindungsgemäßen Haltesystems mit Blick auf eine bei an einem flachen Gegenstand befestigter Aufnahmestruktur sichtbare Seite;
- Figur 5: die Aufnahmestruktur aus Fig. 4 mit Blick auf eine an dem flachen Gegenstand zu befestigende Seite;
- Figuren 6 bis 10: verschiedene Schnittansichten eines erfindungsgemäßen Haltesystems zur Veranschaulichung verschiedener Schritte eines erfindungsgemäßen Verfahrens zum lösbaren Befestigen einer Aufnahmestruktur des Haltesystems an einer Haltestruktur des Haltesystems;
- Figur 11: ein erfindungsgemäßes Haltesystem gemäß einer weiteren bevorzugten Ausführungsform in einer Schnittansicht mit an einem Fahrzeuglenker befestigter Haltevorrichtung ohne Aufnahmestruktur;
- Figur 12: das Haltesystem aus Figs. 11 in einer perspektivischen Ansicht mit an einem Fahrzeuglenker befestigter Haltevorrichtung und einer an einer Haltestruktur befestigten Aufnahmestruktur;
- Figur 13: eine vergrößerte Darstellung von Teilen des Haltesystems aus Fig. 11 im Bereich der Haltestruktur;
- Figur 14: die Teile des Haltesystems im Bereich der Haltestruktur aus Fig. 13 in einer Seitenansicht;
- Figur 15: die Teile des Haltesystems im Bereich der Haltestruktur aus Fig. 13 in einer perspektivischen Ansicht;
- Figur 16: die Teile des Haltesystems im Bereich der Haltestruktur aus Fig. 13 in einer Explosionsdarstellung;
- Figur 17: eine Schwingungsentkopplungseinheit als Teil des Haltesystems im Bereich der Haltestruktur aus Fig. 13 in einer perspektivischen Ansicht; und
- Figur 18: die Haltestruktur des Haltesystems aus Fig. 13 in einer Draufsicht.

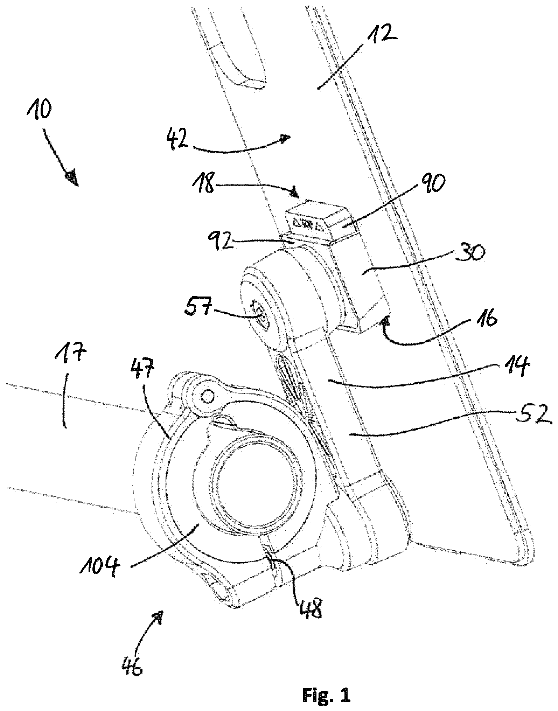

Fig. 1 zeigt ein erfindungsgemäßes Haltesystem 10 zur lösbaren Befestigung eines flachen Gegenstands 12 an einem Objekt 14. Der flache Gegenstand 12 ist in dem gezeigten Beispiel als eine Hülle eines mobilen elektronischen Endgeräts, bspw. eines Smartphones, ausgebildet. Er kann jedoch auch als das mobile elektronische Endgerät selbst ausgebildet sein. Ferner kann das mobile elektronische Endgerät 12 auch als ein Mobiltelefon, ein Tablet-PC, ein mobiles Navigationsgerät, ein Fotoapparat oder ein Bildschirmgerät ausgebildet sein.

In dem gezeigten Beispiel ist das Objekt 14 als eine Haltevorrichtung ausgebildet, die zur vorzugsweise lösbaren Befestigung an einem Bauteil eines Fahrzeugs, insbesondere an einem Fahrzeuglenker 17, ausgebildet ist. Die Haltevorrichtung 14 könnte jedoch auch zur vorzugsweise lösbaren Befestigung an einem Kraftfahrzeugarmaturenbrett, insbesondere in Lamellen einer Kühlluft- oder Heizungsluftöffnung im Armaturenbrett, ausgebildet sein. Ferner könnte die Haltevorrichtung 14 zur vorzugsweise lösbaren Befestigung an einem Einrichtungsgegenstand (z.B. ein Regal, eine Stehlampe, ein Tischfuß oder eine Schranktür) oder zum selbstständigen Stehen auf einer ebenen Fläche (z.B. Tripod oder Stativ) ausgebildet sein. Schließlich wäre es auch denkbar, dass das Objekt 14 ein persönliches Utensil eines Nutzers ist, insbesondere eine Geldbörse, eine Handtasche, ein Taschenkalender, ein Zeichenbrett oder ein Notizblock.

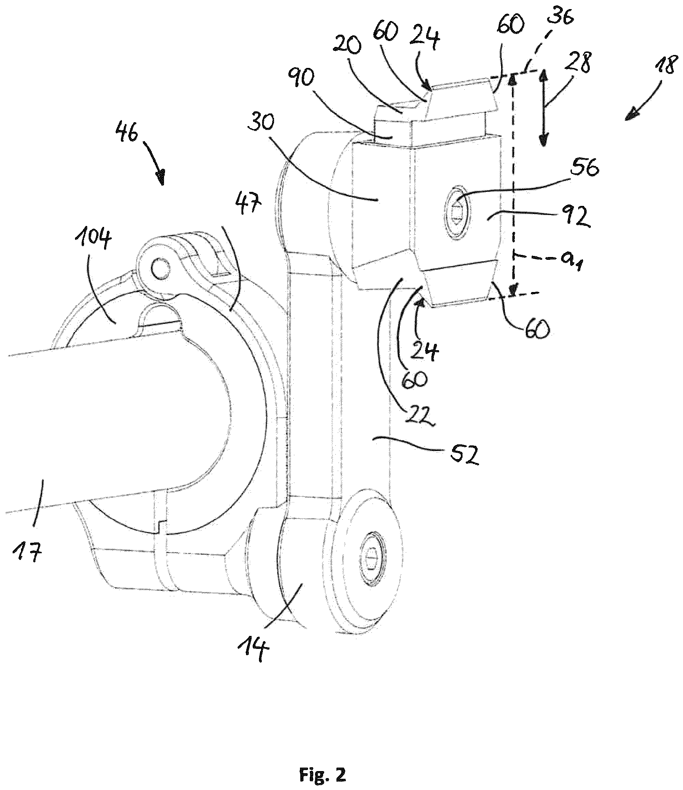

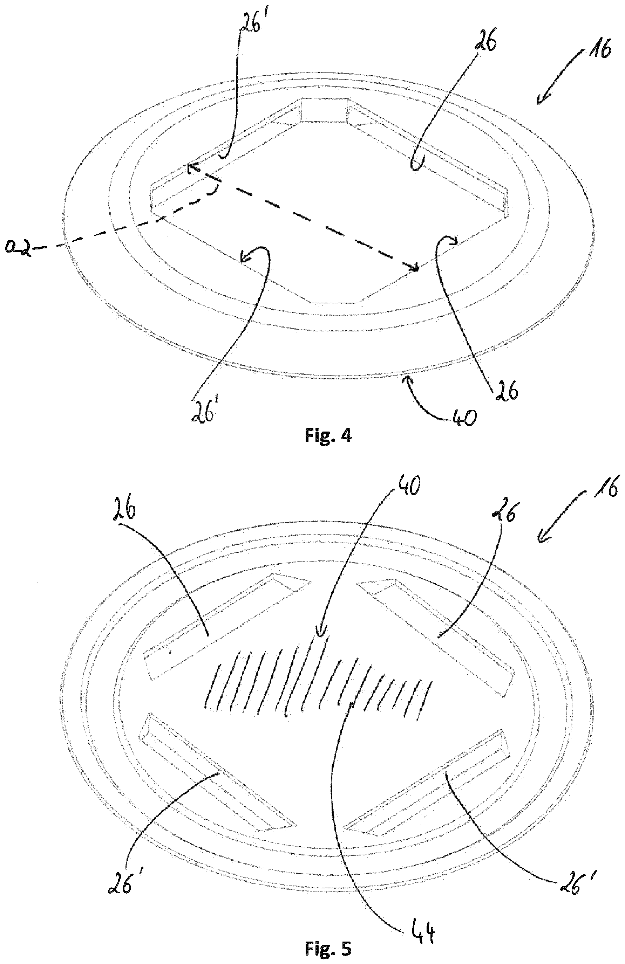

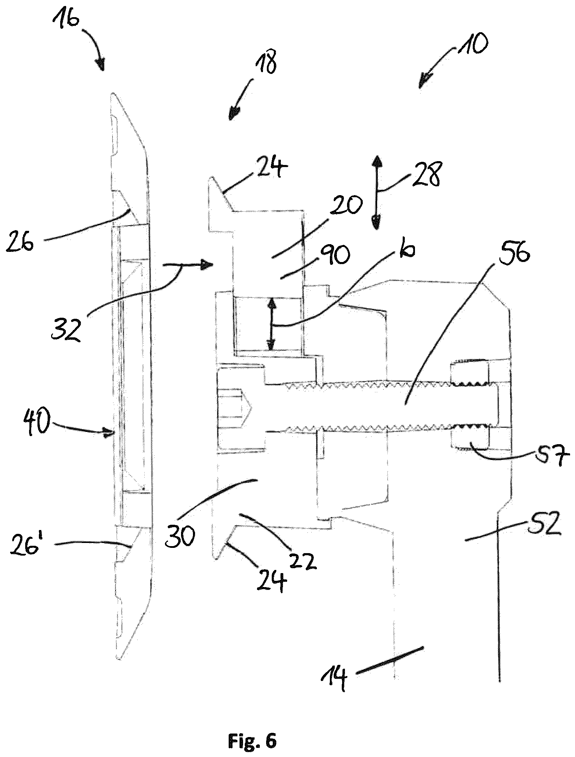

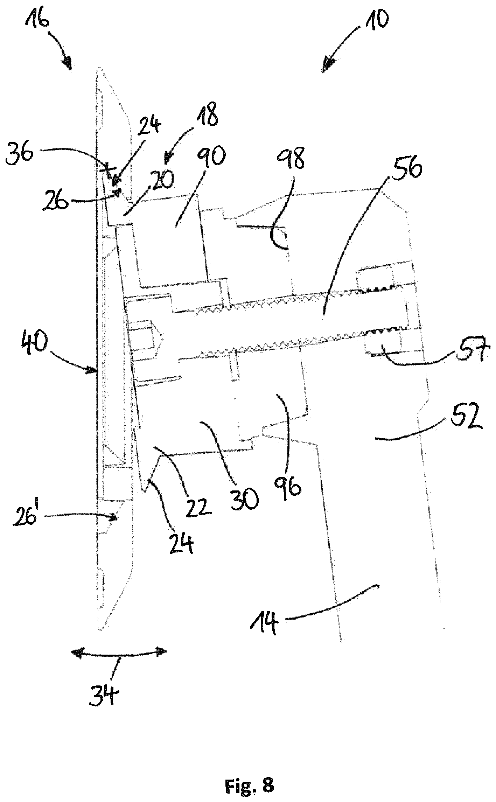

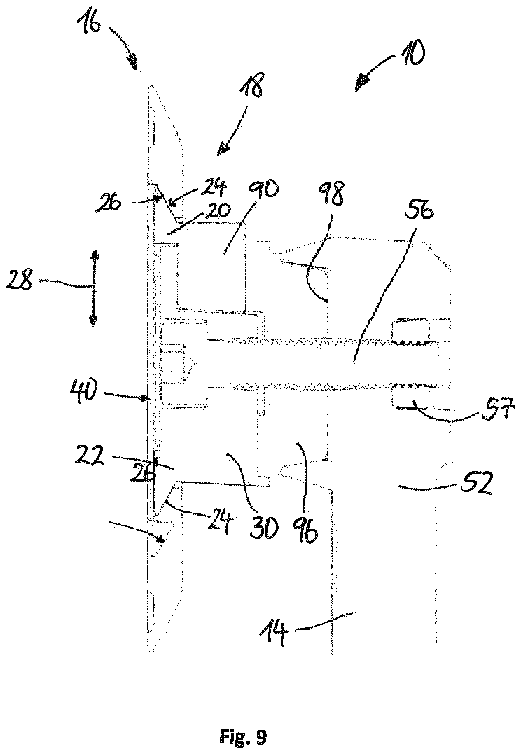

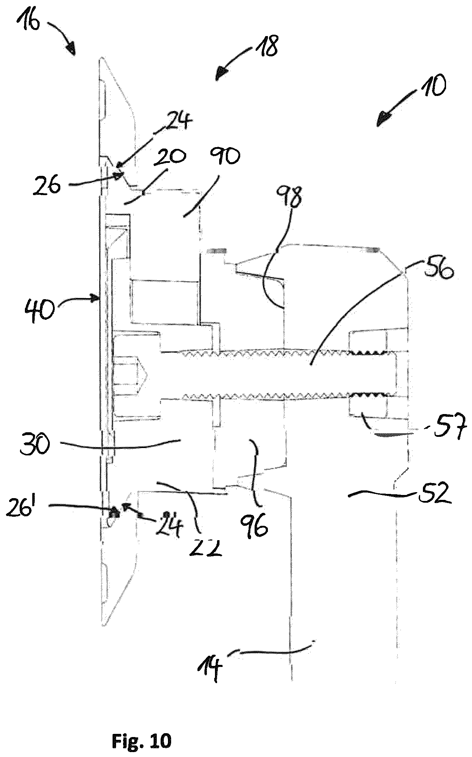

Einem der beiden, Gegenstand 12 oder Objekt 14, ist eine Aufnahmestruktur 16 (vgl. Fign. 4 und 5) und dem anderen der beiden eine Haltestruktur 18 (vgl. Fig. 2) zugeordnet, die zur lösbaren Befestigung des flachen Gegenstands 12 an dem Objekt 14 miteinander in Eingriff treten können. Wie man anhand der Fig. 2 erkennen kann, weist die Haltestruktur 18 mindestens zwei entgegengesetzt zueinander angeordnete und relativ zueinander bewegliche Rastelemente 20, 22 auf, die Rastabschnitte 24 haben, die mit entsprechenden Aufnahmeabschnitten 26 der Aufnahmestruktur 16 in Eingriff treten können. Die entgegengesetzt zueinander angeordneten Rastelemente 20, 22 sind in einer Bewegungsrichtung 28 derart relativ zueinander beweglich, dass sie in einer Raststellung der Haltestruktur 18 (vgl. Fign. 6, 7 und 10) einen größeren Abstand a1 (vgl. Fig. 2) zueinander aufweisen als in einer Freigabestellung der Haltestruktur 18 (vgl. Fign. 8 und 9). Die Haltestruktur 18 kann in der Freigabestellung in die Aufnahmestruktur 16 eingesetzt oder aus dieser entnommen (vgl. Übergang von Fig. 8 zu Fig. 9) und in der Raststellung mit der Aufnahmestruktur 16 verrastet werden (vgl. Fig. 10).

Die vorliegende Erfindung schlägt ein lineares Haltesystem 10 vor, das besonders einfach und schnell zu bedienen und besonders robust ausgestaltet ist. Dies wird insbesondere dadurch erreicht, dass
die Haltestruktur 18 einen Grundkörper 30 aufweist und
lediglich mindestens ein erstes Rastelement 20 der Rastelemente 20, 22 an dem Grundkörper 30 beweglich geführt ist, wohingegen mindestens ein entgegengesetzt zu dem mindesten einen ersten beweglichen Rastelement 20 angeordnetes anderes Rastelement 22 der Rastelemente 20, 22 unbeweglich an dem Grundkörper 30 befestigt ist oder einen integralen Bestandteil des Grundkörpers 30 bildet.
Dies kann sehr gut anhand der Fig. 2 gesehen werden.

Nachfolgend wird zum besseren Verständnis nur noch von einem beweglichen ersten Rastelement 20 und einem feststehenden, unbeweglichen zweiten Rastelement 22 gesprochen. Es versteht sich aber, dass damit immer mindestens ein bewegliches erstes Rastelement 20 bzw. mindestens ein feststehendes, unbewegliches zweites Rastelement 22 gemeint ist.

Bevorzugt ist das erste bewegliche Rastelement 20 zwischen einer ausgefahrenen Stellung (vgl. Fign. 6, 7 und 10), in der sich die Haltestruktur 18 in der Raststellung befindet, und einer eingefahrenen Stellung (vgl. Fign. 8 und 9), in der sich die Haltestruktur 18 in der Freigabestellung befindet, in der Bewegungsrichtung 28 linear beweglich an dem Grundkörper 30 geführt.

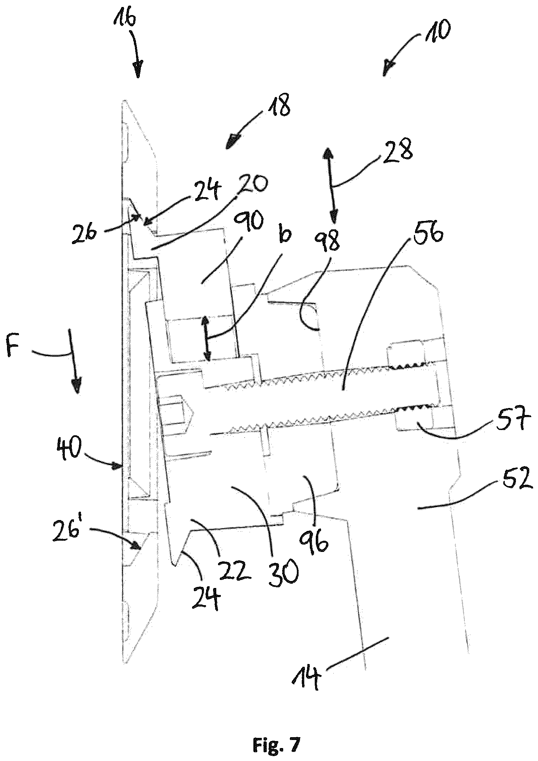

Der durch Bewegung des beweglichen Rastelements 20 von einer ausgefahrenen in eine eingefahrene Stellung zurückgelegte Bewegungsweg b (vgl. Fig. 7) ist so groß, dass die Haltestruktur 18 von der Raststellung in die Freigabestellung gelangt, so dass die Haltestruktur 18 bzw. ein Teil davon in die Aufnahmestruktur 16 eingesetzt werden kann (vgl. Übergang von Fig. 8 zu Fig. 9).

Bei der Erfindung wird die Bewegung des beweglichen ersten Rastelements 20 von der ausgefahrenen in die eingefahrene Stellung in besonders vorteilhafter Weise durch die nur auf das bewegliche Rastelement 20 aufgesetzte Aufnahmestruktur 16, insbesondere zusammen mit dem daran befestigten flachen Gegenstand 12, bewirkt. Ein Nutzer kann alleine durch Ergreifen des flachen Gegenstands 12 diesen zusammen mit der Aufnahmestruktur 16 und dem beweglichen Rastelement 20, auf dem die Aufnahmestruktur 16 aufgesetzt ist, in Richtung der eingefahrenen Stellung bewegen (vgl. Übergang von Fig. 7 zu Fig. 8). In der eingefahrenen Stellung des ersten beweglichen Rastelements kann die Aufnahmestruktur 16 auf die Haltestruktur 18 aufgesetzt (beim Befestigen des flachen Gegenstands 12 an dem Objekt 14) oder von der Haltestruktur 18 abgehoben werden (beim Lösen des flachen Gegenstands 12 von dem Objekt 14). Es sind keine mechanischen Betätigungstasten an dem Haltesystem 10 erforderlich, um die Haltestruktur 18 in ihre Freigabestellung zu bringen. Zudem ist eine Bedienung (Befestigen und Lösen des flachen Gegenstands 12 an dem Objekt 14) mit nur eine Hand problemlos möglich.

Beim Befestigen des flachen Gegenstands 12 hintergreift beim Aufsetzen der Aufnahmestruktur 16 auf das bewegliche Rastelement 20 ein Rastabschnitt 24 des beweglichen Rastelements 20 einen entsprechenden Aufnahmeabschnitt 26 der Aufnahmestruktur 16. Dagegen hintergreift in dieser Phase ein Rastabschnitt 24 eines entgegengesetzt zu dem beweglichen Rastelement 20 angeordneten feststehenden Rastelements 22 einen entsprechenden, dem ersten Aufnahmeabschnitt 26 gegenüberliegend angeordneten zweiten Aufnahmeabschnitt 26` der Aufnahmestruktur 16 noch nicht (vgl. Fig. 7). Stattdessen ist das feststehende Rastelement 22 bzw. dessen Rastabschnitt 24 außerhalb des bzw. vor dem zweiten Aufnahmeabschnitts 26' angeordnet. Eine Aufsetzrichtung 32 der Aufnahmestruktur 16 auf die Haltestruktur 18 verläuft dabei zunächst im Wesentlichen quer zu der Bewegungsrichtung 28 des beweglichen ersten Rastelements 22 (vgl. Fig. 6). Anschließend kann die aufgesetzte Aufnahmestruktur 16 parallel zu der Bewegungsrichtung 28, in Fig. 7 nach unten, bewegt werden, damit der erste Aufnahmeabschnitt 26 mit dem Rastabschnitt 24 des beweglichen Rastelements 20 in Eingriff tritt (vgl. Fig. 7).

Beim Aufsetzen der Aufnahmestruktur 16 auf das erste bewegliche Rastelement 20 kann das zweite feststehende Rastelement 22 nicht in den zweiten Aufnahmeabschnitt 26` eintreten, da sich die Haltestruktur 18 in ihrer Rastposition befindet, in der die Rastelemente 20, 22 in entgegengesetzten Richtungen voneinander weg auseinander bewegt sind. Dabei ist der Abstand a1 zwischen den Rastabschnitten 24 der Rastelemente 20, 22 (vgl. Fig. 2) vorzugsweise größer als eine lichte Weite a2 zwischen den ersten und zweiten Aufnahmeabschnitten 26, 26` (vgl. Fig. 4). Aus den genannten Gründen wird die Aufnahmestruktur 16 (zusammen mit dem flachen Gegenstand 12) schräg auf die Haltestruktur 18 aufgesetzt (vgl. Fig. 7).

Die Aufnahmeabschnitte 26, 26` weisen Hinterschneidungen in der Aufnahmestruktur 16 auf. Wie anhand der Fign. 4 und 5 erkennbar, verfügt die Aufnahmestruktur 16 vorzugsweise über vier jeweils in einem Winkel von 90° zueinander angeordnete Aufnahmeabschnitte 26, sodass die Aufnahmestruktur 16 zusammen mit dem flachen Gegenstand 12 längs oder quer an dem Objekt 14 befestigt werden kann.

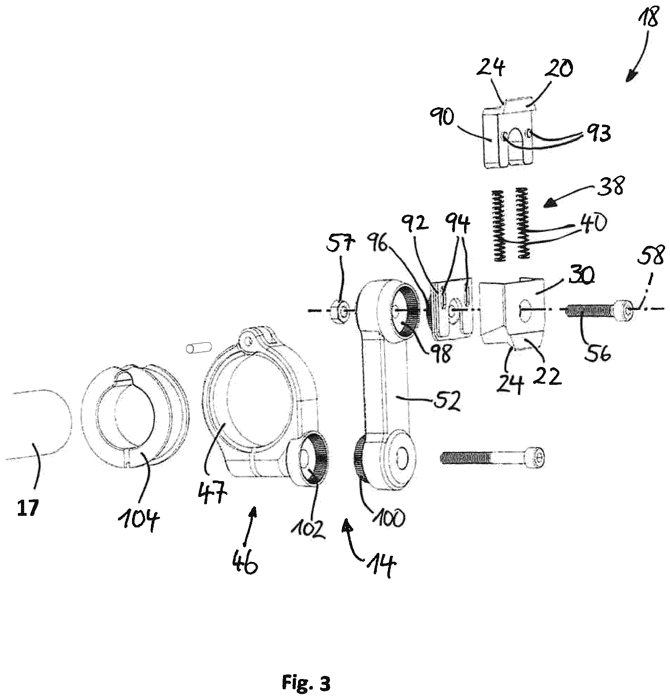

Bevorzugt ist das bewegliche Rastelement 20 mittels eines Federelements 38 beaufschlagt und in einer ausgefahrenen Stellung gehalten, sodass sich die Haltestruktur 18 in der Raststellung befindet (vgl. Fig. 3). Das Federelement 38 umfasst mindestens eine, bevorzugt zwei Druckfedern 40, die sich einerseits an dem Grundkörper 30 und andererseits an dem beweglichen Rastelement 20 abstützen. Bevorzugt sind die Feder(n) 40 des Federelements 38 als Schraubenfedern ausgebildet.

Zur lösbaren Befestigung des Gegenstands 12 an dem Objekt 14 werden immer nur zwei gegenüberliegende Aufnahmeabschnitte 26, 26' benötigt. Die ungenutzten Aufnahmeabschnitte 26, 26` können Seitenführungen bilden und zur weiteren räumlichen Definition des flachen Gegenstands 12 zu dem Haltesystem 10 dienen und ein unerwünschtes Drehen oder Vibrieren des Gegenstands 12 (um eine Achse 58) verhindern. Die beiden gegenüberliegenden ungenutzten Aufnahmeabschnitte 26, 26' können ein Moment von dem flachen Gegenstand 12 auf das Haltesystem 10 übertragen, womit der Gegenstand 12 auch rotatorisch fixiert (um die Achse 58) ist. Die ungenutzten Aufnahmeabschnitte 26, 26' können für eine Seitenführung der aufgenommenen Haltestruktur 18 sorgen, insbesondere während der linearen Bewegung des beweglichen Rastelements 20 relativ zu dem Grundkörper 30, während der eine Relativbewegung zwischen dem Grundkörper 30 und der Aufnahmestruktur 16 erfolgt.

Nach dem Aufsetzen der Aufnahmestruktur 16 zusammen mit dem flachen Gegenstand 12 auf das bewegliche Rastelement 20 bewegt der Nutzer den flachen Gegenstand 12 zusammen mit der Aufnahmestruktur 16 und dem beweglichen Rastelement 20 in die Bewegungsrichtung 28, im Übergang von Fig. 7 zu Fig. 8 nach unten, sodass das bewegliche Rastelement 20 aus der ausgefahrenen Stellung in die eingefahrene Stellung linear bewegt wird. Um das bewegliche Rastelement 20 in die eingefahrene Stellung bzw. die Haltestruktur 18 in die Freigabestellung zu bewegen, müssen die Federkraft des Federelements 38 und - sofern vorhanden - zusätzliche Haltekräfte überwunden werden, welche das erste Rastelement 20 in seiner ausgefahrenen Stellung halten können.

In der eingefahrenen Stellung des beweglichen Rastelements 20 (vgl. Fig. 8) befindet sich die Haltestruktur 18 in ihrer Freigabestellung und kann von der Aufnahmestruktur 16 aufgenommen werden. Vorteilhafterweise wird nicht die gesamte Haltestruktur 18 aufgenommen, sondern nur ein Teil davon, bevorzugt nur die Rastabschnitte 24 der Rastelemente 20, 22. Der Nutzer kann nun den flachen Gegenstand 12 zusammen mit der daran befestigten oder ausgebildeten Aufnahmestruktur 16 aus der schrägen Stellung (vgl. Fig. 8) in Richtung der Haltestruktur 18 verschwenken (Verschwenkbewegung 34 entgegen dem Uhrzeigersinn), so dass das feststehende Rastelement 22 in die Aufnahmestruktur 16 eintritt und dort vor dem zweiten Aufnahmeabschnitt 26` positioniert ist (vgl. Fig. 9). Eine Schwenkachse 36 der Verschwenkbewegung 34 verläuft dabei im Bereich des beweglichen Rastelements 20, insbesondere im Bereich des entsprechenden Rastabschnitts 24, ganz besonders bevorzugt entlang einer distalen Kante des Rastabschnitts 24, quer zu der Bewegungsrichtung 28 des beweglichen Rastelements 20.

Dann kann der Nutzer, der den flachen Gegenstand 12 immer noch umgreift, diesen zusammen mit der Aufnahmestruktur 16 und dem beweglichen Rastelement 20 in die entgegengesetzte Bewegungsrichtung 28 des beweglichen Rastelements 20, im Übergang von Fig. 9 zu Fig. 10 nach oben, bewegen, sodass dieses aus der eingefahrenen Stellung wieder in die ausgefahrene Stellung gelangt. Diese Bewegung kann durch die Federkraft des Federelements 38 unterstützt oder sogar selbsttätig (d.h. ohne, dass der Nutzer den flachen Gegenstand halten bzw. führen muss) ausgeführt werden. Dabei tritt der Rastabschnitt 24 des feststehenden Rastelements 22 mit dem entsprechenden zweiten Aufnahmeabschnitt 26` der Aufnahmestruktur 16 in Eingriff (vgl. Fig. 10). Insbesondere hintergreift dann der Rastabschnitt 24 des feststehenden Rastelements 22 den zweiten Aufnahmeabschnitt 26`. Die Haltestruktur 18 befindet sich nun wieder in ihrer Raststellung. Der flache Gegenstand 12 ist über die Aufnahmestruktur 16 sicher und zuverlässig an der Haltestruktur 18 des Objekts 14 befestigt.

Das Lösen des flachen Gegenstands 12 bzw. dessen Aufnahmestruktur 16 von dem Objekt 14 bzw. dessen Haltestruktur 18 erfolgt in umgekehrter Reihenfolge. Der Nutzer ergreift den flachen Gegenstand 12, drückt ihn zusammen mit dem beweglichen Rastelement 20 in die eingefahrene Stellung (lineare Bewegung in eine erste Richtung 28; in den Fign. 6 bis 10 nach unten), verschwenkt den flachen Gegenstand 12 zusammen mit der Aufnahmestruktur 16 um die Schwenkachse 36 (Verschwenkbewegung 34 im Uhrzeigersinn) weg von der Haltevorrichtung 18 und bewegt den flachen Gegenstand 12 dann zusammen mit dem beweglichen Rastelement 20 in die ausgefahrene Stellung (lineare Bewegung in eine zweite Richtung 28, die der ersten Richtung entgegengesetzt ist; in den Fign. 6 bis 10 nach oben), in der der flache Gegenstand 12 bzw. dessen Aufnahmestruktur 16 von dem Objekt 14 bzw. dessen Haltestruktur 18 gelöst und entfernt werden kann. Die lineare Bewegung des flachen Gegenstands 12 zusammen mit dem beweglichen Rastelement 20 in die ausgefahrene Stellung kann durch ein Federelement 38 unterstützt oder dank eines Federelements 38 sogar selbsttätig ausgeführt werden.

Die obige Beschreibung geht beispielhaft davon aus, dass dem flachen Gegenstand 12 die Aufnahmestruktur 16 und dem Objekt 14 die Haltestruktur 18 zugeordnet ist. Selbstverständlich wäre es auch denkbar, dass in einfacher kinematischer Umkehr dem flachen Gegenstand 12 die Haltestruktur 18 und dem Objekt 14 die Aufnahmestruktur 16 zugeordnet ist.

Des Weiteren geht die obige Beschreibung davon aus, dass das bewegliche erste Rastelement 20 in einer im Wesentlichen vertikalen Richtung (Bewegungsrichtung 28) beweglich ist. Selbstverständlich wäre es auch denkbar, dass das erste Rastelement 20 in einer im Wesentlichen horizontalen Richtung (senkrecht zur Bewegungsrichtung 28) beweglich wäre.

Ferner sind in den gezeigten Beispielen die Rastabschnitte 24 einander abgewandt (radial nach außen zeigend) an den Rastelementen 20, 22 ausgebildet. Es wäre auch denkbar, dass die Rastabschnitte 24 einander zugewandt (radial nach innen zeigend) an den Rastelementen 20, 22 ausgebildet sind. Eine entsprechende Umgestaltung der Aufnahmeabschnitte 26, 26` der Aufnahmestruktur 16 wäre dann allerdings erforderlich.

Durch das lediglich eine bewegliche Rastelement 20 und das feststehende zweite Rastelement 22 können die Anzahl der beweglichen Teile des Haltesystems 10 deutlich reduziert werden. Auf einen Mechanismus mit Betätigungstasten zum Bewegen der Haltestruktur 18 in die Freigabestellung kann ganz verzichtet werden. Dies erlaubt einen einfacheren, kostengünstigeren und robusteren Aufbau des Haltesystems 10. Zudem ist die Bedienung - wie oben beschrieben - besonders einfach und nutzerfreundlich. Insbesondere ist die Bedienung mit einer Hand und mit Handschuhen sowohl in horizontaler als auch in vertikaler Bewegungsrichtung problemlos möglich.

In den gezeigten Ausführungsbeispielen ist das bewegliche Rastelement 20 oben an der Haltestruktur 18 angeordnet. Das Federelement 38 muss deshalb mindestens so stark gewählt werden, dass der an der Haltestruktur 18 befestigte flache Gegenstand 12 nicht bereits durch sein Eigengewicht das bewegliche Rastelement 20 nach unten in die eingefahrene Stellung und damit die Haltestruktur 18 in die Freigabestellung bewegen kann.

In einer Abwandlung von dem gezeigten Ausführungsbeispiel wäre es auch denkbar, dass das bewegliche erste Rastelement 20 unten an der Haltestruktur 18 angeordnet ist, wobei dann das feststehende Rastelement 22 oben angeordnet wäre. Der an der Haltestruktur 18 befestigte flache Gegenstand 12 würde sich dann nicht auf dem beweglichen Rastelement 20, sondern an dem feststehenden Rastelement 22 abstützen. Das Federelement 38 könnte entsprechend kleiner dimensioniert werden, da es nur noch das bewegliche Rastelement 20 in seiner ausgefahrenen Stellung halten muss, was im Übrigen auch durch die Gewichtskraft des ersten Rastelements 20 unterstützt wird.

In diesem Fall müsste die Aufnahmestruktur 16 dann von unten schrägt auf das bewegliche Rastelement 20 aufgesetzt werden, und das Rastelement 20 müsste nach oben bewegt werden, um den zweiten Aufnahmeabschnitt 26` mit dem Rastabschnitt 24 des oberen feststehenden Rastelements 22 in Eingriff bringen zu können.

Bevorzugt ist die Aufnahmestruktur 16 dem flachen Gegenstand 12 zugeordnet. Die Aufnahmestruktur 16 kann integraler Bestandteil des flachen Gegenstands 12 oder als separates Teil ausgestaltet und an diesem befestigt sein, bspw. mittels einer Klebeschicht 44 auf einer an dem flachen Gegenstand 12 zu befestigenden Seite 40. Insbesondere ist die Aufnahmestruktur 16 auf einer nach außen und von dem mobilen elektronischen Endgerät weg gerichteten Rückseite 42 einer Schutzhülle 12 für das mobile elektronische Endgerät angeordnet. Die vorliegende Erfindung betrifft auch Schutzhüllen 12 für mobile elektronische Endgeräte, auf deren äußerer Rückseite 42 die Aufnahmestruktur 16 des erfindungsgemäßen Haltesystems 10 ausgebildet oder angeordnet ist. Über die Aufnahmestruktur 16 kann die Schutzhülle 12 lösbar mit einer Haltestruktur 18 des Haltesystems 10 in Eingriff treten, um das in der Hülle 12 aufgenommen mobile Endgerät lösbar an der Haltestruktur 18 bzw. an dem Objekt 14 zu befestigen.

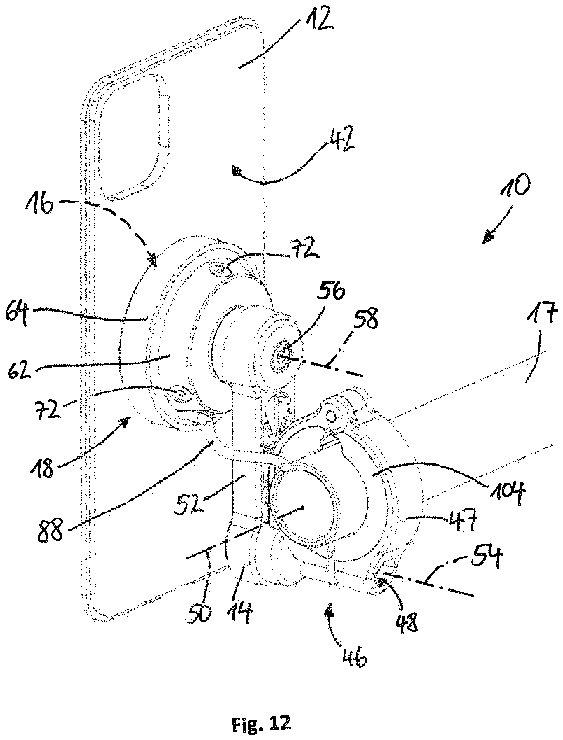

Gemäß Fig. 12 kann die Haltevorrichtung 14 eine Befestigungsvorrichtung 46 zur vorzugsweise lösbaren Befestigung der Haltevorrichtung 14 an einem Bauteil eines Fahrzeugs, insbesondere an einem Fahrzeuglenker 17, aufweisen. In dem gezeigten Beispiel ist die Befestigungsvorrichtung 46 als eine Klemmschelle 47 ausgebildet, die mittels einer Schraube 48 in einer gewünschten Drehposition um eine Längsachse 50 des Lenkers 17 an dem Lenker 17 festgelegt werden kann. Über die Schraube 48 kann ferner ein Befestigungsarm 52 in einer gewünschten Drehposition um eine Drehachse 54 an der Befestigungsvorrichtung 46 befestigt werden. Über eine andere Schraube 56 kann die Haltestruktur 18 in einer gewünschten Drehposition um eine weitere Drehachse 58 an dem Befestigungsarm 52 befestigt werden. Somit kann mit der Haltevorrichtung 14 eine in mehreren Freiheitsgraden verstellbare Halterung der Haltestruktur 18 an dem Fahrzeuglenker 17 und damit auch eine beliebige Anordnung und Ausrichtung eines mobilen elektrischen Endgeräts an einem Lenker 17 erreicht werden.

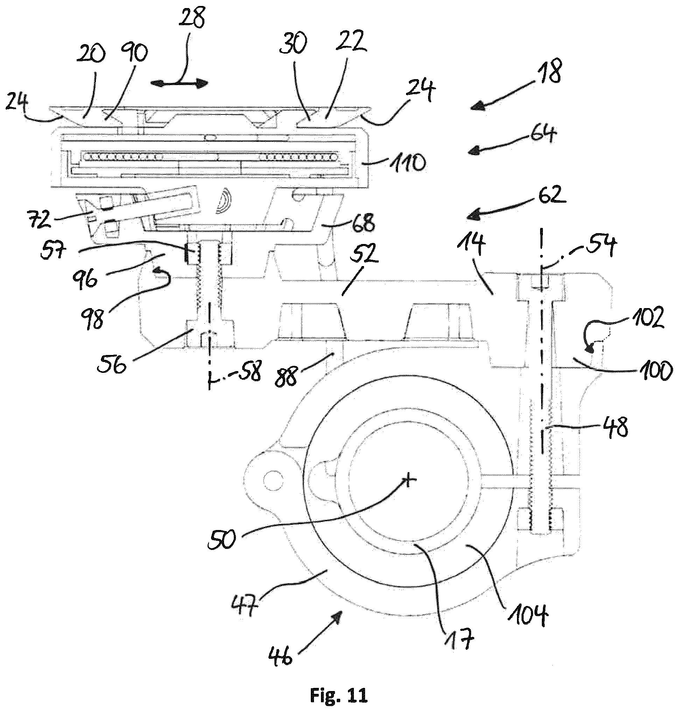

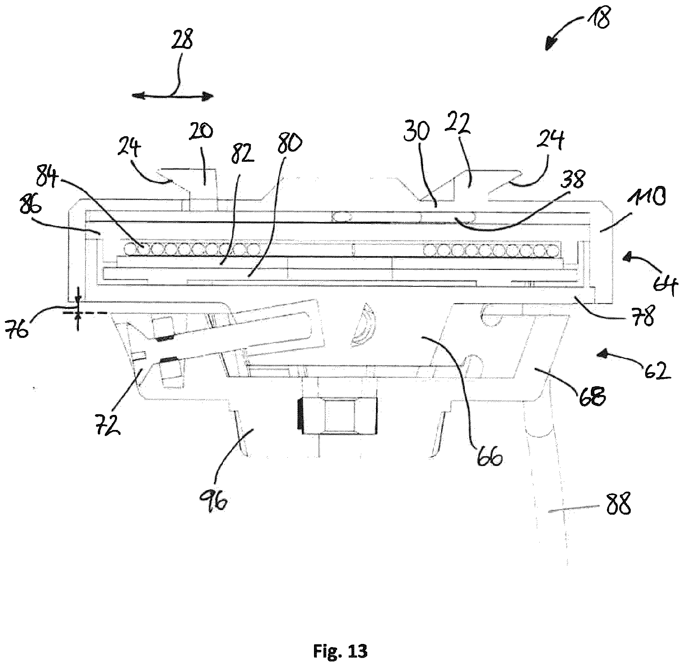

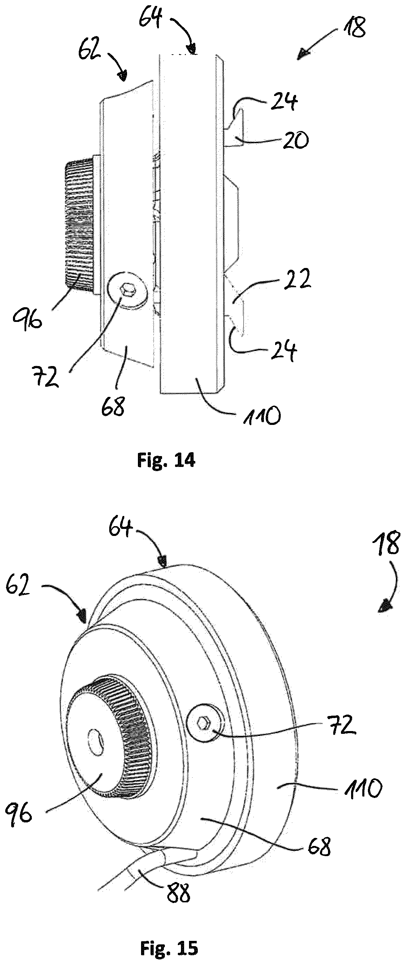

Das Haltesystem 10 gemäß dem zweiten Ausführungsbeispiel der Fign. 11-18 verfügt ferner über eine Vibrations-Entkopplungseinheit 62 und eine induktive Ladeeinheit 64, die in Fig. 13 im Detail dargestellt sind.

Die Entkopplungseinheit 62 dient dazu, einen Körperschall des Fahrzeugs während des Betriebs von der Schutzhülle 12 bzw. letztendlich von dem darin aufgenommenen mobilen elektrischen Endgerät fernzuhalten. Ohne Entkopplungseinheit 62 könnte der Körperschall eine Beschädigung von hoch empfindlichen Linsenaufhängungen von mobilen elektrischen Endgeräten durch Vibrationen des Fahrzeugmotors bewirken. Die Entkopplungseinheit 62 sorgt für eine schwimmende Lagerung der Aufnahmestruktur 16 an der Haltevorrichtung 14.

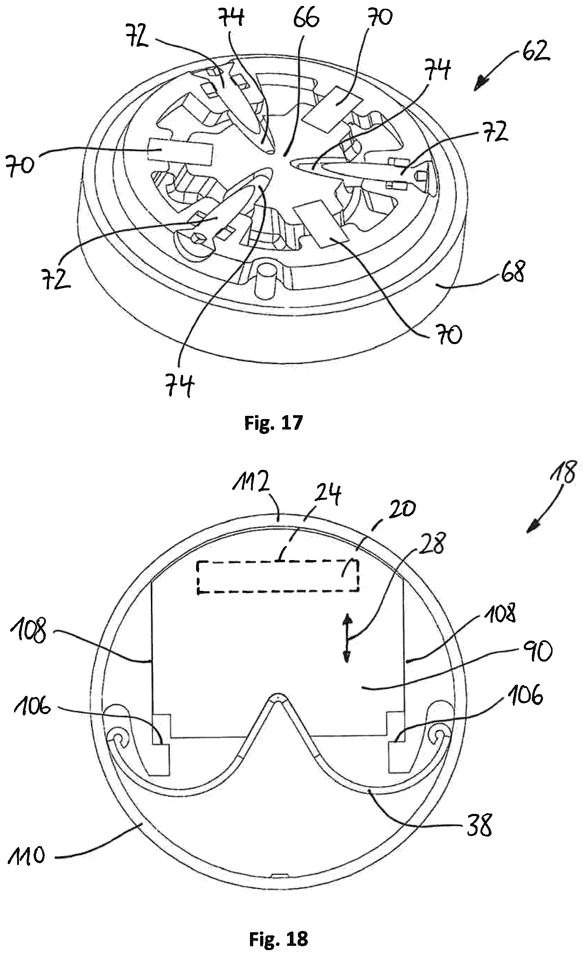

Die schwimmende Lagerung ist in Fig. 17 im Detail gezeigt. Die Vibrations-Entkopplungseinheit 62 umfasst einen äußeren Umfangsbereich 68, der gleichzeitig ein Gehäuse der Entkopplungseinheit 62 bildet. Selbstverständlich könnten Umfangsbereich 68 und Gehäuse auch als separate Teile ausgebildet und aneinander befestigt sein. Der äußere Umfangsbereich 68 ist der Haltevorrichtung 14 zugeordnet und an dieser mittels der Schraube 56 lösbar befestigt. Ferner umfasst die Entkopplungseinheit 62 einen in dem Umfangsbereich 68 schwimmend gelagerten zentralen Bereich 66, der der Haltestruktur 18 zugeordnet bzw. über die induktive Ladeeinheit 64 daran befestigt ist. Selbstverständlich wäre es auch denkbar, den Umfangsbereich 68 der Haltestruktur 18 zuzuordnen und den zentralen Bereich 66 der Haltevorrichtung 14 zuzuordnen.

Die beiden Bereiche 66, 68 sind zueinander mittels eines in Umfangsrichtung verlaufenden Spalt zueinander beabstandet und mittels mehrerer elastischer Elemente 70 miteinander verbunden. Die elastischen Elemente 70 sind über den Umfang des Spalts gleichmäßig zueinander beabstandet angeordnet. In dem gezeigten Beispiel sind drei elastische Elemente 70 vorgesehen, die jeweils einen Abstand von 120° zu den benachbarten Elementen 70 aufweisen. Es wäre aber auch denkbar mehr oder weniger als die drei Elemente 70 vorzusehen. Der zentrale Bereich 66 wird ausschließlich durch die Elemente 70 gehalten. Die Elemente 70 sorgen für eine Entkopplung des zentralen Bereichs 66 von dem Umfangsbereich 68.

Ferner verfügt die Entkopplungseinheit 62 über Begrenzungsschrauben 72, welche einen oder mehrere räumliche Freiheitsgrade der Bewegung des schwimmend aufgehängten zentralen Bereichs 66 relativ zu dem Umfangsbereich 68 begrenzen können. Die Schrauben 72 sind in den Umfangsbereich 68 geschraubt und ragen in Aussparungen 74 hinein, die in dem zentralen Bereich 66 ausgebildet sind. Je nach Größe und Abmessungen der Aussparungen 74 und wie weit die Schrauben 72 eingeschraubt sind, kann die Begrenzung der räumlichen Freiheitsgrade eingestellt werden. In dem gezeigten Beispiel sind drei Begrenzungsschrauben 72 vorgesehen. Es wäre aber auch denkbar mehr oder weniger als die drei Schrauben 72 vorzusehen oder ganz auf sie zu verzichten. In dem Beispiel sind die Schrauben 72 zwischen den elastischen Elementen 70 angeordnet. Es wäre aber auch denkbar, die Begrenzungsschrauben 72 anderweitig anzuordnen. Zwischen der Entkopplungseinheit 62 und benachbarten Komponenten, in diesem Beispiel der induktiven Ladeeinheit 64, ist ein Spalt 76 zum Ermöglichen einer freien Bewegung des zentralen Bereichs 60 relativ zu dem Umfangsbereich 68 im Rahmen der Vibrationsdämpfung vorhanden (vgl. Fig. 13)

Die induktive Ladeeinheit 64 wird anhand der Fig. 13 näher erläutert. Sie dient dazu, ein entsprechend ausgestattetes mobiles elektrisches Endgerät induktiv zu laden. Sie umfasst ein Gehäusebauteil 78 und darin angeordnet eine Platine 80, eine Abschirmung 82 und eine Induktionsspule 84. Das Gehäuse 78 kann integraler Bestandteil des zentralen Bereichs 66 der Entkopplungseinheit 62 sein. Ein Deckel 86 verschließt das Gehäusebauteil 78, vorzugsweise wasserdicht. Insbesondere ist der Deckel 86 mit dem Gehäusebauteil 78 verklebt. Das Innere des Gehäusebauteils 78 kann nach der Montage der elektrischen Komponenten mit einem Harz oder Kunststoff oder ähnlichem ausgegossen werden. Ein Kabel 88 ist in das Gehäusebauteil 78 geführt, um die Induktionsspule 84 mit elektrischer Energie zu versorgen, bspw. von einem tragbaren Akku oder einer sog. Powerbank. Ebenfalls denkbar wäre es, wenn das Kabel 88 an eine Fahrzeugelektrik angeschlossen wäre und die erforderliche Energie für die Induktionsspule 84 aus dem Fahrzeugbordnetz bezieht. An dem Gehäusebauteil 78 kann ein Gehäuse 110 befestigt sein, welches den Grundkörper 30 der Haltestruktur 18 bildet. Integraler Bestandteil des Gehäuses 110 ist das feststehende Rastelement 22.

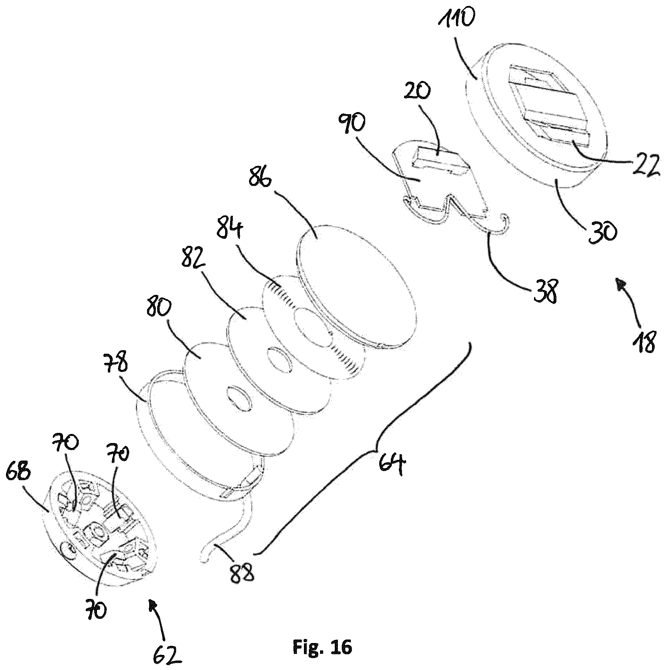

Die einzelnen Komponenten der induktiven Ladeeinheit 64 sind auch in der Explosionsdarstellung gemäß Fig. 16 dargestellt. Es wäre denkbar, dass der Deckel 86 des Ladeeinheit 64 und ein Schieber 90, der das bewegliche erste Rastelement 20 trägt, aus einem transparenten Kunststoff gefertigt sind. Das erlaubt es, in dem wasserdicht verschlossenen Gehäuse 78 eine Halbleiterlichtquelle, bspw. eine LED, insbesondere eine RGB-LED, anzuordnen und abhängig von einem Betriebszustand der induktiven Ladeeinheit 64 zu betrieben. Dabei kann das von der Halbleiterlichtquelle ausgesandte Licht über den transparenten Deckel 86 in den transparenten Schieber 90 eingekoppelt werden, aus dem das Licht dann bspw. über das bewegliche erste Rastelement 20 nach außen hin sichtbar ausgekoppelt wird. Auf diese Weise wäre es denkbar, einem Nutzer Statusinformationen über einen aktuellen Ladevorgang optisch anzuzeigen. Wenn die Einheit 64 bspw. eingeschaltet und betriebsbereit ist, könnte grünes Licht ausgesandt werden. Wenn die Einheit 64 bspw. ausgeschaltet oder nicht bereit ist, könnte kein Licht ausgesandt werden. Wenn ein Ladevorgang aktiv ist, könnte blaues Licht ausgesandt werden. Ein Defekt der Ladeeinheit 64 oder ein Fehler im Ladevorgang könnte bspw. mit einem roten Licht kenntlich gemacht werden.

Eine weitere Besonderheit des erfindungsgemäßen Haltesystems 10 besteht darin, dass anders als im Stand der Technik, beim Verrasten der Rastelemente 20, 22 mit den entsprechenden Aufnahmeabschnitten 26, 26` der Aufnahmestruktur 16 nicht die gesamte Haltestruktur 18 in der Aufnahmestruktur 16 aufgenommen ist. Wie anhand der Fig. 2 gut zu erkennen ist, ragen bevorzugt die Rastabschnitte 24 der Rastelemente 20, 22 in Richtung der Aufnahmestruktur 16 (also weg von der Haltevorrichtung 14) über den Rest der Haltestruktur 18, insbesondere über den Grundkörper 30, hinaus, sodass lediglich die Rastabschnitte 24 in der Aufnahmestruktur 16 aufgenommen werden. Dadurch wird selbst bei Verschmutzung der Haltestruktur 18 oder der Aufnahmestruktur 16 eine sichere und zuverlässige Bedienung des Haltesystems 10 und Befestigung des flachen Gegenstands 12 an dem Objekt 14 ermöglicht.

Anhand der Fig. 2 ist ferner zu erkennen, dass die Seitenflächen 60 der Rastelemente 20, 22 im Bereich der Rastabschnitte 24 etwas angeschrägt sind, sodass die Querflächen, welche Teil der Rastabschnitte 24 sind, eine konische Form haben, die sich zu den distalen Enden der Rastabschnitte 24 hin verjüngt. Mit anderen Worten laufen die Seitenflächen 60 zu den distalen Enden hin aufeinander zu. Dadurch wird das Einsetzen des beweglichen ersten Rastelements 20 bzw. dessen Rastabschnitts 24 in den entsprechenden Aufnahmeabschnitt 26 der Aufnahmestruktur 16 erleichtert und die Bedienbarkeit des Haltesystems 10 weiter verbessert. Die distalen Enden der Rastabschnitte 24 können in einem Querschnitt abgerundet oder angefast sein, um das Verschwenken der Aufnahmestruktur 16 um die Schwenkachse 36 (Verschwenkbewegung 34; vgl. Fig. 8) zu erleichtern.

In dem Beispiel der Fign. 1-3 ist der Grundkörper 30 hohl und zu zwei Seiten hin offen ausgestaltet. Über die offene Oberseite werden der Schieber 90 mit dem daran befestigten bzw. ausgebildeten beweglichen ersten Rastelement 20 und die Druckfedern 40 in den Grundkörper 30 eingeführt. Dann wird mittels der Schraube 56 ein Deckel 92 an dem Grundkörper 30 befestigt, wobei an dem Schieber 90 ausgebildete Führungszapfen 93 in entsprechende Führungsnuten 94 eingreifen, die an einer Innenseite des Deckels 92 und des Grundkörpers 30 ausgebildet sind. Da der Deckel 92 starr mit dem Grundkörper 30 verbunden ist, kann er als ein Teil des Grundkörpers 30 angesehen werden. Die Schraube 56 dient ferner dazu, den Grundkörper 30 drehfest um die Achse 58 an der Haltevorrichtung 14 bzw. dem Befestigungsarm 52 zu befestigen. Insbesondere werden der Grundkörper 30, der Deckel 92 und der Befestigungsarm 52 zwischen einem Schraubenkopf der Schraube 56 und einer Mutter 57 eingespannt. Obwohl der Schieber in dem Beispiel der Fign. 1-3 anders ausgestaltet ist als der Schieber in dem Beispiel der Fign. 11-18, sind beide Schieber mit dem Bezugszeichen 90 bezeichnet worden.

Die drehfeste Befestigung wird dadurch erreicht, dass ein an dem Deckel 92 ausgebildeter konischer Vorsprung 96 an seiner Außenumfangsfläche eine Rändelung aufweist, die mit einer entsprechenden Rändelung einer entsprechend konisch geformten Vertiefung 98 zusammenwirkt, die in dem Befestigungsarm 52 ausgebildet ist. In entsprechender Weise wird auch eine drehfeste Verbindung zwischen dem Befestigungsarm 52 und der Befestigungsvorrichtung 46 erreicht. Dort ist an dem Befestigungsarm 52 ein konischer Vorsprung 100 mit einer Rändelung an seiner Außenumfangsfläche angeordnet, die mit einer entsprechenden Rändelung einer entsprechend konisch geformten Vertiefung 102 zusammenwirkt, die in der Befestigungsvorrichtung 46 ausgebildet ist. Über eine Adaptermanschette 104, die vorzugsweise aus einem elastischen Material, besonders bevorzugt mit einem hohen Reibwert, gefertigt ist, kann die Befestigungsvorrichtung 46 an Lenker 17 mit unterschiedlichen Durchmessern angepasst werden.

In dem zweiten Ausführungsbeispiel gemäß den Fign. 11-18 ist das Federelement 38 als eine Bügel-Druckfeder ausgebildet (vgl. Fign. 16 und 18). In Fig. 18 sind ferner Anschläge 106 gezeigt, die an dem Grundkörper 30 befestigt sind oder mit diesem einteilig ausgebildet sind und eine Wegbegrenzung für den Schieber 90 und damit für die Bewegung des beweglichen ersten Rastelements 20 in die eingefahrene Stellung bewirkt. Die Bügelfeder 38 drückt den Schieber 90 und damit das bewegliche erste Rastelement 20 in die ausgefahrene Stellung. Der Schieber 90 ist über seitliche Führungen 108, die an dem Grundkörper 30 befestigt sind oder mit diesem einteilig ausgebildet sind, in seiner linearen Bewegung geführt. Eine Innenseite einer äußeren Wand 112 des Gehäuses 110 sorgt für eine Wegbegrenzung für den Schieber 90 bzw. für das bewegliche erste Rastelement 20 in Richtung der ausgefahrenen Stellung. In der Ansicht von Fig. 18 ist das bewegliche Rastelement 20 auf der Rückseite des Schiebers 90 ausgebildet und in der ausgefahrenen Stellung gezeigt.

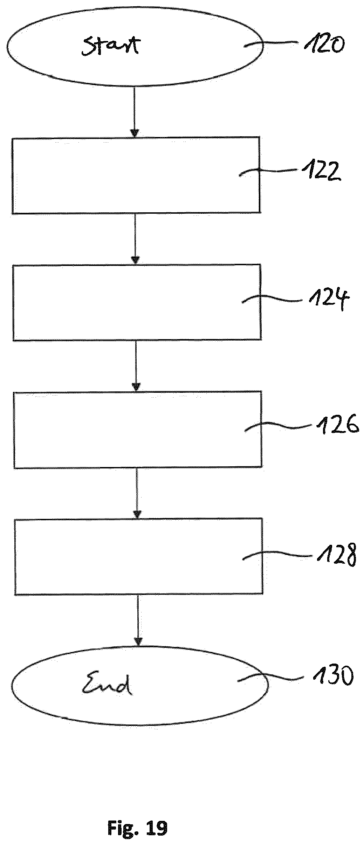

Abschließend wird das erfindungsgemäße Verfahren zur lösbaren Befestigung eines flachen Gegenstands 12 an einem Objekt 14 mithilfe des erfindungsgemäßen Haltesystems 10 anhand der Fig. 19 näher erläutert. Das Verfahren beginnt in einem Verfahrensschritt 120.

Dann wird in einem ersten Schritt 122 die Aufnahmestruktur 16 schräg auf das bewegliche Rastelement 20 aufgesetzt (Übergang von Fig. 6 zu Fig. 7), sodass ein erster Aufnahmeabschnitt 26 der Aufnahmestruktur 16 hinter einen Rastabschnitt 24 des beweglichen Rastelements 20 greift, wohingegen ein zweiter Aufnahmeabschnitt 26' der Aufnahmestruktur 16 vor dem Rastabschnitt 24 des fest angeordneten Rastelements 22 angeordnet ist, das entgegengesetzt zu dem beweglichen Rastelement 20 angeordnet ist.

In einem anschließenden Schritt 124 wird bei auf das bewegliche Rastelement 20 aufgesetzter Aufnahmestruktur 16 die schräg aufgesetzte Aufnahmestruktur 16 (vgl. Fig. 7) mit einer Kraft F in eine Richtung beaufschlagt, die im Wesentlichen parallel zu der Bewegungsrichtung 28 des beweglichen Rastelements 20 verläuft, sodass das bewegliche Rastelement 20 von der Aufnahmestruktur 16 in eine eingefahrene Stellung (vgl. Fig. 8) bewegt wird, in der sich die Haltestruktur 18 in einer Freigabestellung befindet.

In einem nachfolgenden Schritt 126 wird bei in der eingefahrenen Stellung befindlichem beweglichem Rastelement 20 (vgl. Fig. 8) die Aufnahmestruktur 16 aus der schräg aufgesetzten Stellung in Richtung der Haltestruktur 18 verschwenkt (vgl. Fig. 9). Die entsprechende Verschwenkbewegung 34 um die Schwenkachse 36 ist in Fig. 8 gezeigt.

Schließlich wird in einem Schritt 128 bei in Richtung der Haltestruktur 18 verschwenkter Aufnahmestruktur 16 (vgl. Fig. 9), das bewegliche Rastelement 20 zusammen mit der Aufnahmestruktur 16 in die ausgefahrene Stellung bewegt, in der sich die Haltestruktur 18 in einer Raststellung befindet (vgl. Fig. 10), wobei ein zweiter Aufnahmeabschnitt 26' der Aufnahmestruktur 16, der dem ersten Aufnahmeabschnitt 26 gegenüberliegend angeordnet ist, hinter den Rastabschnitt 24 des fest angeordneten Rastelements 22 greift.

Damit ist der flache Gegenstand 12 an dem Objekt 14 befestigt und das Verfahren kann in einem Verfahrensschritt 130 beendet werden. Zum Lösen des flachen Gegenstands 12 von dem Objekt 14 können die Verfahrensschritte 120 bis 130 in umgekehrter Reihenfolge durchlaufen werden.

Zusammenfassend kann folgendes vorteilhaftes Grundprinzip der Erfindung gemäß einer bevorzugten Ausführungsform festgehalten werden: Das vorgeschlagene Verriegelungskonzept umfasst auf der Seite der Haltevorrichtung 14 zwei keilförmige Rastelemente 20, 22, welche in einem Hinterschnitt 26, 26' in der passenden Aufnahmestruktur 16 auf der Geräteseite im Eingriff sind. Dabei ist das eine keilförmige Element 20 linear beweglich und das andere keilförmige Element 22 feststehend. Zur Verriegelung wird das Endgerät mit der Aufnahmestruktur 16 auf dem beweglichen Rastelement 20 abgelegt (eingehangen). Das Gerät hängt jetzt lose an dem Haltesystem 10. Der Nutzer zieht nun das Gerät nach unten und schwenkt es über das feststehende Rastelement 22. Beim Loslassen des Geräts wird das bewegliche Element 20 durch das Federelement 38 nach oben gedrückt, wobei das feststehende Element 22 in den entsprechenden Hinterschnitt 26` eingreift. Die Verriegelungsgeometrie ist nun spielfrei und nicht von alleine lösbar.

Um das Gerät wieder von dem Haltesystem 10 zu trennen, wird in umgekehrter Weise verfahren. Der Nutzer drückt das Gerät gegen die Federkraft des Federelements 38 nach unten und bewegt somit auch das keilförmige Rastelement 20 nach unten. Das Gerät kann nun wegen des aus dem Hinterschnitt 26` herausbewegten Rastelement 22 durch ein leichtes Verschwenken ausgehangen und nach oben entnommen werden.

Das erfindungsgemäße Haltesystem 10 kombiniert ein lineares und ein rotatorisches Prinzip, ist sehr platzsparend und geht mit einer minimalen Anwenderinteraktion einher. Das Haltesystem 10 besteht aus nur sehr wenigen Teilen und kann sehr kostengünstig, z.B. im Kunststoffspritzguss Verfahren, hergestellt werden. Dabei kann insbesondere der Schieber 90 und/oder das bewegliche Rastelement 20 aus Kunststoff gefertigt werden. Aber auch der Grundkörper 30 und/oder das feststehende Rastelement 22 können aus Kunststoff gefertigt sein. Auch eine Fertigung dieser Bauteile (90, 20; 30, 22) aus mehreren Komponenten, bspw. einem Kern aus Metall und einem zumindest teilweisen Umspritzen des Kerns mit Kunststoff ist denkbar. Das Haltesystem 10 ist besonders flach bauend. Ein Abstand zwischen dem Haltesystem 10 bzw. der Haltestruktur 18 und dem gehaltenen Endgerät ist so weit reduziert, dass eine induktive Energieübertragung möglich ist. Durch die Wahl einer doppelseitigen, keilförmigen Eingriffsgeometrie (Rastelemente 20, 22 mit schräg stehenden Seitenflächen 60) wird zum einen eine Spielfreiheit der Rastverbindung und zum anderen eine Zentrierung beim Erstkontakt des Rastabschnitts 24 des beweglichen Rastelements 20 mit der Aufnahmestruktur 16 am Gerät erreicht.

## Patentansprüche

1. Haltesystem (10) zur lösbaren Befestigung eines flachen Gegenstands (12) an einem Objekt (14), wobei einem der beiden, dem flachen Gegenstand (12) oder dem Objekt (14), eine Aufnahmestruktur (16) und dem anderen der beiden eine Haltestruktur (18) zugeordnet ist und die beiden Strukturen (16, 18) zur lösbaren Befestigung des flachen Gegenstands (12) an dem Objekt (14) miteinander in Eingriff treten können,
wobei die Haltestruktur (18) mindestens zwei entgegengesetzt zueinander angeordnete und relativ zueinander bewegliche Rastelemente (20, 22) aufweist, die Rastabschnitte (24) haben, die ausgebildet sind, mit entsprechenden Aufnahmeabschnitten (26; 26`) der Aufnahmestruktur (16) in Eingriff zu treten, und die entgegengesetzt zueinander angeordneten Rastelemente (20, 22) derart relativ zueinander beweglich sind, dass ein Abstand (a1) zwischen den Rastabschnitten (24) veränderbar ist, um die Haltestruktur (18) zwischen einer Freigabestellung, in der die Haltestruktur (18) in die Aufnahmestruktur (16) einsetzbar oder aus dieser entnehmbar ist, und einer Raststellung umzuschalten, in der die Haltestruktur (18) mit der Aufnahmestruktur (16) verrastet ist,
**dadurch gekennzeichnet, dass**
die Haltestruktur (18) einen Grundkörper (30) aufweist und
lediglich mindestens ein erstes Rastelement (20) der Rastelemente (20, 22) an dem Grundkörper (30) beweglich geführt ist, wohingegen mindestens ein anderes entgegengesetzt zu dem mindesten einen ersten beweglichen Rastelement (20) angeordnetes Rastelement (22) der Rastelemente (20, 22) unbeweglich an dem Grundkörper (30) befestigt ist oder einen integralen Bestandteil des Grundkörpers (30) bildet.

2. Haltesystem (10) nach Anspruch 1, wobei das mindestens eine erste bewegliche Rastelement (20) zwischen einer ausgefahrenen Stellung, in der sich die Haltestruktur (18) in der Raststellung befindet, und einer eingefahrenen Stellung, in der sich die Haltestruktur (18) in der Freigabestellung befindet, linear beweglich an dem Grundkörper (30) geführt ist.

3. Haltesystem (10) nach Anspruch 1 oder 2, wobei das mindestens eine erste bewegliche Rastelement (20) mittels eines Federelements (38) beaufschlagt und in einer ausgefahrenen Stellung gehalten ist, sodass sich die Haltestruktur (18) in der Raststellung befindet.

4. Haltesystem (10) nach einem der vorhergehenden Ansprüche, wobei das mindestens eine erste bewegliche Rastelement (20) manuell entgegen der Kraft eines Federelements (38) beaufschlagbar ist, um das mindestens eine erste bewegliche Rastelement (20) in eine eingefahrene Stellung zu bewegen, sodass sich die Haltestruktur (18) in der Freigabestellung befindet.

5. Haltesystem (10) nach einem der vorhergehenden Ansprüche, wobei die Aufnahmestruktur (16) derart ausgebildet ist, dass sie schräg auf das mindestens eine erste bewegliche Rastelement (20) aufsetzbar ist, sodass ein erster Aufnahmeabschnitt (26) der Aufnahmestruktur (16) hinter den Rastabschnitt (24) des mindestens einen ersten beweglichen Rastelements (20) greift, wohingegen der Rastabschnitt (24) des mindestens einen anderen fest angeordneten Rastelements (22) außerhalb eines zweiten Aufnahmeabschnitts (26`) der Aufnahmestruktur (16) angeordnet ist, der dem ersten Aufnahmeabschnitt (26) gegenüberliegend angeordnet ist.

6. Haltesystem (10) nach Anspruch 5, wobei die Haltestruktur (18) derart ausgebildet ist, dass bei schräg auf die Haltestruktur (18) aufgesetzter Aufnahmestruktur (16), eine Kraftbeaufschlagung der Aufnahmestruktur (16) in eine Richtung, die im Wesentlichen parallel zu einer Bewegungsrichtung (28) des mindestens einen ersten beweglichen Rastelements (20) verläuft, das mindestens eine erste bewegliche Rastelement (20) in eine eingefahrene Stellung bewegt.

7. Haltesystem (10) nach Anspruch 6, wobei die Aufnahmestruktur (16) derart ausgebildet ist, dass sie bei in der eingefahrenen Stellung befindlichem mindestens einem ersten beweglichen Rastelement (20) aus der schräg aufgesetzten Stellung in Richtung der Haltestruktur (18) verschwenkbar ist.

8. Haltesystem (10) nach Anspruch 7, wobei die Haltestruktur (18) derart ausgebildet ist, dass sich bei in Richtung der Haltestruktur (18) verschwenkter Aufnahmestruktur (16) das mindestens eine erste bewegliche Rastelement (20) zusammen mit der Aufnahmestruktur (16) in die ausgefahrene Stellung bewegt, wobei der zweite Aufnahmeabschnitt (26`) der Aufnahmestruktur (16), der dem ersten Aufnahmeabschnitt (26) gegenüberliegend angeordnet ist, hinter den Rastabschnitt (24) des mindestens einen anderen fest angeordneten Rastelements (22) greift.

9. Haltesystem (10) nach einem der vorhergehenden Ansprüche, wobei der flache Gegenstand (12) ein mobiles elektronisches Endgerät ist, insbesondere ein Mobiltelefon, ein Smartphone, ein Tablet-PC, ein mobiles Navigationsgerät, ein Fotoapparat oder ein Bildschirmgerät, oder eine Schutzhülle für ein solches mobiles elektronisches Endgerät ist.

10. Haltesystem (10) nach einem der vorhergehenden Ansprüche, wobei das Objekt (14) eine Haltevorrichtung, die zur vorzugsweise lösbaren Befestigung an einem Bauteil eines Fahrzeugs, insbesondere an einem Lenker (17) des Fahrzeugs, oder an einem Kraftfahrzeugarmaturenbrett oder an einem Einrichtungsgegenstand oder die zum selbstständigen Stehen auf einer ebenen Fläche ausgebildet ist, oder ein persönliches Utensil eines Nutzers ist, insbesondere eine Geldbörse, eine Handtasche, ein Taschenkalender, ein Zeichenbrett oder ein Notizblock.

11. Haltesystem (10) nach einem der vorhergehenden Ansprüche, wobei die Aufnahmestruktur (16) dem flachen Gegenstand (12) zugeordnet ist, vorzugsweise integraler Bestandteil des flachen Gegenstands (12) oder an diesem befestigt ist, und/oder wobei die Haltestruktur (18) dem Objekt (14) zugeordnet ist, vorzugsweise integraler Bestandteil des Objekts (14) oder an dem Objekt (14) befestigt ist.

12. Haltevorrichtung (14) zur Verwendung in einem Haltesystem (10) nach einem der vorhergehenden Ansprüche, wobei die Haltevorrichtung (14) ein Objekt darstellt, an dem ein flacher Gegenstand (12) lösbar befestigbar ist, die Haltevorrichtung (14) umfassend eine Haltestruktur (18), die zur lösbaren Befestigung an einer dem flachen Gegenstand (12) zugeordneten Aufnahmestruktur (16) mit dieser in Eingriff treten kann,
wobei die Haltestruktur (18) mindestens zwei entgegengesetzt zueinander angeordnete und relativ zueinander bewegliche Rastelemente (20, 22) aufweist, die Rastabschnitte (24) haben, die ausgebildet sind, mit entsprechenden Aufnahmeabschnitten (26; 26`) der Aufnahmestruktur (16) in Eingriff zu treten, und die entgegengesetzt zueinander angeordneten Rastelemente (20, 22) derart relativ zueinander beweglich sind, dass ein Abstand (a1) zwischen den Rastabschnitten (24) veränderbar ist, um die Haltestruktur (18) zwischen einer Freigabestellung, in der die Haltestruktur (18) in die Aufnahmestruktur (16) einsetzbar oder aus dieser entnehmbar ist, und einer Raststellung umzuschalten, in der die Haltestruktur (18) mit der Aufnahmestruktur (16) verrastet ist,
**dadurch gekennzeichnet, dass**
die Haltestruktur (18) einen Grundkörper (30) aufweist und
lediglich mindestens ein erstes Rastelement (20) der Rastelemente (20, 22) an dem Grundkörper (30) beweglich geführt ist, wohingegen mindestens ein anderes entgegengesetzt zu dem mindesten einen ersten beweglichen Rastelement (20) angeordnetes Rastelement (22) der Rastelemente (20, 22) unbeweglich an dem Grundkörper (30) befestigt ist oder einen integralen Bestandteil des Grundkörpers (30) bildet.

13. Haltevorrichtung (14) nach Anspruch 12, wobei die Haltevorrichtung (14) eine Befestigungsvorrichtung (46) zur vorzugsweise lösbaren Befestigung der Haltevorrichtung (14) an einem Bauteil eines Fahrzeugs, insbesondere an einem Lenker (17) des Fahrzeugs oder an einem Kraftfahrzeugarmaturenbrett, oder zur vorzugsweise lösbaren Befestigung der Haltevorrichtung (14) an einem Einrichtungsgegenstand aufweist.

14. Schutzhülle (12) für eine mobiles elektronisches Endgerät, die ausgebildet ist, lösbar an dem mobilen Endgerät befestigt zu werden und dieses vor äußerer Krafteinwirkung geschützt aufzunehmen, wobei die Hülle (12) zur Verwendung mit einem Haltesystem (10) nach einem der Ansprüche 1 bis 11 ausgebildet ist und die Hülle (12) auf ihrer Rückseite (42) eine Aufnahmestruktur (16) des Haltesystems (10) aufweist, die ausgebildet ist, mit einer Haltestruktur (18) des Haltesystems (10) in Eingriff zu treten, um das in der Hülle (12) aufgenommene mobile Endgerät lösbar an einer Haltevorrichtung (14) des Haltesystems (10) zu befestigen.

15. Verfahren zur lösbaren Befestigung eines flachen Gegenstands (12) an einem Objekt (14), wobei einem der beiden, dem flachen Gegenstand (12) oder dem Objekt (14), eine Aufnahmestruktur (16) und dem anderen der beiden eine Haltestruktur (18) zugeordnet ist, die zur lösbaren Befestigung des flachen Gegenstands (12) an dem Objekt (14) miteinander in Eingriff treten können,
wobei die Haltestruktur (18) mindestens zwei entgegengesetzt zueinander angeordnete und relativ zueinander bewegliche Rastelemente (20, 22) aufweist, die Rastabschnitte (24) haben, die ausgebildet sind, mit entsprechenden Aufnahmeabschnitten (26; 26`) der Aufnahmestruktur (16) in Eingriff zu treten, und die entgegengesetzt zueinander angeordneten Rastelemente (20, 22) derart relativ zueinander beweglich sind, dass ein Abstand (a1) zwischen den Rastabschnitten (24) veränderbar ist, um die Haltestruktur (18) zwischen einer Freigabestellung, in der die Haltestruktur (18) in die Aufnahmestruktur (16) einsetzbar oder aus dieser entnehmbar ist, und einer Raststellung umzuschalten, in der die Haltestruktur (18) mit der Aufnahmestruktur (16) verrastbar ist,
**gekennzeichnet durch** die nachfolgenden Verfahrensschritte:
Aufsetzen der Aufnahmestruktur (16) schräg auf mindestens ein erstes bewegliches Rastelement (20), sodass ein erster Aufnahmeabschnitt (26) der Aufnahmestruktur (16) hinter einen Rastabschnitt (24) des mindestens einen ersten beweglichen Rastelements (20) greift, wohingegen ein zweiter Aufnahmeabschnitt (26`) der Aufnahmestruktur (16), der dem ersten Aufnahmeabschnitt (26) gegenüberliegend angeordnet ist, vor dem Rastabschnitt (24) von mindestens einem anderen fest angeordneten Rastelement (22) angeordnet ist, das entgegengesetzt zu dem mindestens einen ersten beweglichen Rastelement (20) angeordnet ist,
bei auf das mindestens eine erste bewegliche Rastelement (20) aufgesetzter Aufnahmestruktur (16), Beaufschlagen der schräg aufgesetzten Aufnahmestruktur (16) mit einer Kraft in eine Richtung, die im Wesentlichen parallel zu einer Bewegungsrichtung (28) des mindestens einen ersten beweglichen Rastelements (20) verläuft, sodass das mindestens eine erste bewegliche Rastelement (20) von der Aufnahmestruktur (16) in eine eingefahrene Stellung bewegt wird, in der sich die Haltestruktur (18) in einer Freigabestellung befindet,
bei in der eingefahrenen Stellung befindlichem mindestens einem ersten beweglichen Rastelement (20), Verschwenken der Aufnahmestruktur (16) aus der schräg aufgesetzten Stellung in Richtung der Haltestruktur (18), und
bei in Richtung der Haltestruktur (18) verschwenkter Aufnahmestruktur (16), Bewegen des mindestens einen ersten beweglichen Rastelements (20) zusammen mit der Aufnahmestruktur (16) in eine ausgefahrene Stellung, in der sich die Haltestruktur (18) in einer Raststellung befindet, wobei der zweite Aufnahmeabschnitt (26`) der Aufnahmestruktur (16) hinter den Rastabschnitt (24) des mindestens einen anderen fest angeordneten Rastelements (22) greift.
